# EUROPÄISCHE PATENTSCHRIFT

(11) **EP 0 314 032 B1**
(45) Veröffentlichungstag und Bekanntmachung des Hinweises auf die Patenterteilung: **11.08.1993**
(21) Anmeldenummer: 88117642.4
(22) Anmeldetag: 22.10.1988
(51) Int. Cl.: B62D 51/06

(54) **Einachsgerät**
Uni-axle working vehicle
Véhicule de travail uniaxe

(30) Priorität: 24.10.1987 DE 3736045; 29.12.1987 DE 3744419
(43) Veröffentlichungstag der Anmeldung: 03.05.1989
(73) Patentinhaber: Gebr. Holder GmbH & Co., D-72555 Metzingen (DE)
(72) Erfinder: Braun, Fritz, D-7408 Kusterdingen (DE); Gmelin, Wolfgang, D-7000 Stuttgart 1 (DE)
(74) Vertreter: Hoeger, Stellrecht & Partner

(56) Entgegenhaltungen:
- CH-A- 607 699
- DE-B- 1 072 834
- FR-A- 1 423 861
- FR-A- 1 563 859
- FR-A- 2 592 622
- US-A- 4 519 459

## Beschreibung

Die Erfindung betrifft ein Einachsgerät mit einem Holm, einem Verbrennungsmotor und zwei an einer Radachse montierten, angetriebenen Rädern, wobei der Verbrennungsmotor einen Hydrostat, dieser mindestens einen Fahrmotor und letzterer seinerseits die beiden Räder antreiben sowie einer Montagevorrichtung für Anbaugeräte.

Derartige Einachsgeräte sind aus der CH-A-607 699 bekannt.

Das in dieser Druckschrift offenbarte Einachsgerät weist einen Verbrennungsmotor auf, der über eine hydrostatische Einheit ein Differentialgetriebe treibt, das seinerseits wiederum die Radachsen der Maschine antreibt. Bei diesem Einachsgerät ist zwischen dem Antriebsmotor und dem Differentialgetriebe die hydrostatische Einheit als geschlossene Einheit bestehend aus Hydrostat und Fahrmotor eingebaut.

Der Nachteil dieser Lösung ist darin zu sehen, daß gegenüber konventionellen, ein Verbrennungsmotor und ein Schaltgetriebe aufweisenden Lösungen vom Aufbau her keinerlei weiterer Vorteil erzielt wird, so daß lediglich das teurere Hydrostatgetriebe durch die Regelbarkeit desselben gerechtfertigt ist.

Der Erfindung liegt daher die Aufgabe zugrunde, ein Einachsgerät der gattungsgemäßen Art zu schaffen, welches möglichst einfach aufgebaut und einfach zu bedienen ist.

Diese Aufgabe wird bei einem Einachsgerät der eingangs beschriebenen Art erfindungsgemäß dadurch gelöst, daß das Einachsgerät eine Zentraleinheit, gebildet aus dem Verbrennungsmotor, dem Hydrostat, einem Holm und der Montagevorrichtung für Anbaugeräte sowie eine mit der Zentraleinheit lösbar verbundene Achseinheit, gebildet aus dem Fahrmotor und der Radachse umfaßt.

Dieser Aufbau des erfindungsgemäßen Geräts in zwei getrennten Einheiten hat zum einen produktionstechnisch den großen Vorteil, daß diese Einheiten getrennt gefertigt werden können und erst am Schluß zu dem Einachsgerät zusammengesetzt werden müßen. Des weiteren hat dieser Aufbau den Vorteil, daß dadurch die Wartung des Einachsgeräts sehr stark vereinfacht werden kann, da sich die Achseinheit als Ganzes abnehmen läßt.

Gleichzeitig ist ein Vorteil der vorliegenden Erfindung in der Verwendung eines Hydrostaten, d.h. einer in ihrer Förderleistung steuerbaren Hydraulikpumpe zu sehen, welche den hydraulischen Fahrmotor treibt, der sich in Abhängigkeit der vom Hydrostaten geförderten Ölmenge unterschiedlich schnell dreht. Somit bestehen keine konstruktiven Probleme beim Antrieb des Hydrostaten über den Verbrennungsmotor, da dessen Anordnung am Einachsgerät beliebig sein kann. Ferner läßt sich der Hydrostat durch Verschwenken eines diesem zugeordneten Steuerhebels in einfacher Weise sowohl in Vorwärtsfahrt als auch in Rückwärtsfahrt variabel steuern, so daß sämtliche Fahrfunktionen einschließlich der Geschwindigkeitsregelung an einem Hebel zusammengefaßt werden können. Desweiteren hat ein derartiger Antrieb über einen Hydrostaten und mindestens einen Fahrmotor den Vorteil, daß sich Bremsen am Einachsgerät erübrigen, da der Fahrmotor dann, wenn keine Ölmenge gefördert wird, selbst als Bremse wirkt.

Die erfindungsgemäße Trennung beim erfindungsgemäßen Einachsgerät zwischen der Zentraleinheit und der Achseinheit läßt sich weiterhin dadurch vorteilhaft ausnützen, daß die Achseinheit und die Zentraleinheit ungefähr quer zur Achs- und und parallel zur Fahrtrichtung relativ zueinander in verschiedenen Stellungen positionierbar sind. Dies schafft die Möglichkeit, ohne konstruktive Veränderungen den Schwerpunkt des Einachsgeräts, beispielsweise unter Berücksichtigung des jeweiligen Anbaugeräts, zu verändern, so daß die das Einachsgerät fahrende Bedienungsperson am Holm beispielsweise stets kein Stützmoment zum Halten des Einachsgeräts aufbringen muß.

Besonders vorteilhaft ist es, wenn die Achseinheit und die Zentraleinheit relativ zueinander verstellbar sind, so daß sich bei der Veränderung der Schwerpunktslage ein Abnehmen und Neupositionieren der Achseinheit an der Zentraleinheit erübrigt.

Um die Möglichkeit der Veränderung der Schwerpunktslage konsequent ausnützen zu können, hat es sich als zweckmässig erwiesen, wenn die Achseinheit an der Zentraleinheit, insbesondere an einem Rahmen der Zentraleinheit, verschiebbar gelagert ist, so dass beispielsweise vor oder während des Betriebs sich der Schwerpunkt beim Einachsgerät verlagern und einstellen lässt.

Die gegenüber der Zentraleinheit verschiebliche Achseinheit lässt sich besonders einfach und exakt dann in die richtige Position bringen, wenn die Achseinheit mittels einer Spindel verschieblich ist, so dass durch Drehen der Spindel ein stufenloses Verschieben der Achseinheit relativ zur Zentraleinheit möglich ist.

Für alle Anwendungsfälle, in denen häufig und beispielsweise auch während der Fahrt eine Verstellung des Schwerpunkts des Einachsgeräts erforderlich ist, hat es sich als zweckmässig erwiesen, wenn die Achseinheit mittels einer Hydraulikeinrichtung verschiebbar ist, so dass beispielsweise über einen die Hydraulikeinrichtung steuernden Regler der Schwerpunkt verschoben werden kann.

Neben der vorstehend beschriebenen Verschiebung der Achseinheit relativ zur Zentraleinheit durch Handregelung ist im Rahmen der erfindungsgemäßen Lösung auch eine automatische Verschiebung der Achseinheit möglich. Hierbei hat es sich als besonders zweckmäßig erwiesen, wenn mittels der Hydraulikeinrichtung die Achseinheit in Abhängigkeit vom Radgegendrehmoment verschiebbar ist, da dieses Radgegendrehmoment letztlich die Kraft beeinflußt, mit welcher eine Bedienungsperson das erfindungsgemäße Einachsgerät beim Betrieb am Holm selbst abstützen muß.

Eine konstruktiv besonders einfache Lösung sieht vor, daß die Hydraulikeinrichtung das Radgegendrehmoment über Druckänderungen in einem Hydrostat-Fahrmotor-Kreislauf erfaßt und mit diesem einen Hydraulikzylinder steuert. Dieses Ausführungsbeispiel nützt die Eigenschaften eines hydrostatischen Antriebs konsequent aus, da der Druck in dem Hydrostat-Fahrrotor-Kreislauf proportional zum Radgegendrehmoment ist, das auf das Einachsgerät als Ganzes wirkt.

Die einfachste konstruktive Lösung sieht vor, daß der Hydraulikzylinder einen Verstellkolben umfaßt, welcher in einer Richtung durch ein federelastisches Element und in der entgegengesetzten Richtung durch den druckseitig herrschenden Druck im Hydrostat-Fahrmotor-Kreislauf beaufschlagt ist. Da eine Erhöhung des Radgegendrehmoments im Hydrostat-Fahrmotor-Kreislauf auch den druckseitigen Druck erhöht, stellt sich somit an dem Verstellkolben ein Kraftgleichgewicht entsprechend dem jeweiligen Radgegendrehmoment ein. In Fortbildung dieses Ausführungsbeispiels ist es auch möglich, die Kraftwirkung des federelastischen Elements noch dadurch zu unterstützen, daß der Verstellkolben von dieser Seite her noch zusätzlich durch den rücklaufseitigen Druck im Hydrostat-Fahrmotor-Kreislauf beaufschlagt ist, so daß die Verschiebung des Verstellkolbens von der Druckdifferenz zwischen dem druckseitigen Druck und dem rücklaufseitigen Druck im Hydrostat-Fahrmotorkreislauf sowie von der Federkraft abhängig ist.

Um die Kraft, ab welcher der Verstellkolben gegen die Kraft des federelastischen Elements verschiebbar ist, wählen zu können, ist es vorteilhaft, wenn das federelastische Element einstellbar ist.

Ferner ist es ebenfalls zweckmäßig, wenn ein Verschiebebereich der Achseinheit und somit des Verstellkolbens durch Anschläge festlegbar ist.

Bei dem erfindungsgemäßen Einachsgerät ist es, insbesondere um antreibbare Anbaugeräte einsetzen zu können, erforderlich, daß die Zentraleinheit eine vom Verbrennungsmotor angetriebene Zapfwelle aufweist. Hierbei hat es sich trotz des erfindungsgemäß verwendeten hydrostatischen Antriebs der Räder als zweckmäßig erwiesen, wenn die Zentraleinheit eine vom Verbrennungsmotor mechanisch angetriebene Zapfwelle zum Antrieb der Anbaugeräte aufweist, da die Zapfwelle in der Regel mit einem konstanten Übersetzungsverhältnis zum Verbrennungsmotor läuft, so daß die geringeren Verluste bei Verwendung des mechanischen Antriebs der Zapfwelle von Vorteil sind.

Ein besonders vorteilhafter Aufbau des erfindungsgemäßen Einachsgeräts sieht vor, daß der Verbrennungsmotor eine ungefähr senkrecht zu einer Fahrebene stehende Abtriebswelle aufweist und über ein erstes Übertragungsgetriebe eine parallel zu dieser Abtriebswelle stehende Antriebswelle des Hydrostaten und über ein zweites Übertragungsgetriebe eine parallel zu der Abtriebswelle ausgerichtete Antriebswelle des Zapfwellengetriebes treibt.

Die einfachste Möglichkeit der Ausbildung dieser Übertragungsgetriebe sieht vor, dass das erste und das zweite Übertragungsgetriebe Riemengetriebe sind.

Besonders kompakt baut die erfindungsgemässe Zentraleinheit dann, wenn die Übertragungsgetriebe im wesentlichen zwischen zwei Längsholmen der Zentraleinheit angeordnet sind, so dass beispielsweise das Zapfwellengetriebe der Verbrennungsmotor und der Hydrostat hintereinander angeordnet sind.

Bei den bisher beschriebenen Ausführungsbeispielen des erfindungsgemässen Einachsgeräts wurde auch von Konstruktionen ausgegangen, die lediglich einen Fahrmotor zum Antrieb der beiden Räder umfassen.

Besonders vorteilhaft ist es jedoch, wenn jedem Rad ein achsfest montierter Fahrmotor zugeordnet ist, da sich dann, insbesondere bei grösseren Einachsgeräten, sämtliche Probleme mit dem unterschiedlichen Antrieb der Räder beim Kurvenfahren lösen und auch über diese Räder beispielsweise eine aktive Lenkung des gesamten Einachsgeräts möglich ist.

Als besonders geeignet hat sich dabei eine Antriebsform erwiesen, bei welcher die Fahrmotoren beider Räder parallel geschaltet sind.

Es ist bei den bisher beschriebenen Ausführungsbeispielen auch denkbar, daß die Lenkung des Einachsgeräts beim Kurvenfahren dadurch erfolgt, daß die Fahrmotoren in Reihe geschaltet sind und steuerbare Umgehungsleitungen für jeden Fahrmotor vorgesehen sind. Dies erfordert jedoch einen zusätzlichen konstruktiven Aufwand, so daß es wesentlich zweckmäßiger ist, wenn eine jeden Fahrmotor durchströmende Ölmenge durch eine Steuereinheit mit einem Steuerventil regelbar ist, so daß direkt durch unterschiedlichen Antrieb der einzelnen Räder die Kurvenfahrt erfolgt.

Das Steuerventil kann beispielsweise dann so ausgebildet sein, daß dieses ein bei Vorwärtsfahrt die Ölmengen abweichend von einer Gleichverteilung steuerndes Steuerglied umfaßt, wobei dieses Steuerglied im einfachsten Fall ein Dreiwegeventil ist.

Bei einer derartigen Steuerung des erfindungsgemäßen Einachsgeräts besteht jedoch das Problem, daß bei Rückwärtsfahrt die Steuerung der einzelnen Fahrmotoren über die Ölmenge sich genau umgekehrt als bei Vorwärtsfahrt verhält, so daß sich die Bedienung des erfindungsgemäßen Einachsgeräts wesentlich komplizieren und die Unfallgefahr erhöhen würde.

Aus diesem Grund ist vorgesehen, daß das Steuerglied des Steuerventils bei Rückwärtsfahrt unwirksam ist, so daß bei Rückwärtsfahrt stets eine Geradeausfahrt erfolgt.

Die einfachste Möglichkeit das Steuerglied bei Rückwärtsfahrt ausser Betrieb zu setzen sieht vor, dass das Steuerglied umgehende, bei Rückwärtsfahrt zuschaltbare Parallelleitungen vorgesehen sind.

Diese Parallelleitungen können beispielsweise durch ein eigenes Ventil verschlossen sein, welches bei Rückwärtsfahrt geöffnet ist. Noch einfacher und vor allem betriebssicherer ist es jedoch, wenn jede Parallelleitung ein Einwegventil aufweist, welches diese bei Vorwärtsfahrt blockiert und bei Rückwärtsfahrt freigibt, so dass die Parallelleitungen entsprechend dem jeweiligen Fahrtzustand blockiert oder frei sind, ohne dass zusätzliche Bedienungsschritte nötig werden. Dies ist insbesondere im Hinblick auf die Bedienungssicherheit des erfindungsgemässen Einachsgeräts besonders wichtig.

Da bei den erfindungsgemässen Einachsgeräten die Lenkbewegungen möglichst weich und nicht ruckartig erfolgen sollen, ist es erforderlich, die den einzelnen Fahrmotoren zugeführten Ölmengen ausgehend von dem Geradeausfahrtzustand bei Beginn des Lenkvorgangs möglichst geringfügig ändern zu können. Aus diesem Grund ist es vorteilhaft, wenn eine Ölmenge auf die beiden Fahrmotoren aufteilender Gleichverteiler vorgesehen ist und wenn zur Steuerung der Ölmengen das Steuerventil dem Gleichverteiler parallelgeschaltet ist. Bei dieser Ausführungsform sorgt also zunächst der Gleichverteiler für eine gleiche Aufteilung der beiden Ölmengen zu den beiden Fahrmotoren und abweichend von dieser grundsätzlich festgelegten Gleichverteilung wird durch das Steuerventil lediglich eine geringe Änderung dieser Gleichverteilung bei Einsetzen einer Lenksteuerung erfolgen.

Bei allen Ausführungsformen, bei welchen ein Gleichverteiler vorgesehen ist, ist es, damit das Steuerglied bei Rückwärtsfahrt unwirksam ist, nicht notwendig, dieses durch Parallelleitungen zu umgehen. Es ist vielmehr ausreichend, wenn das Steuerglied bei Rückwärtsfahrt durch ein Ventil blockierbar ist, wobei vorteilhafterweise vorgesehen ist, daß dieses Ventil ein Rückschlagventil ist.

Eine Blockierung des Steuerglieds bei Rückwärtsfahrt hat jedoch bei Verwendung eines Gleichverteilers zur Folge, daß das erfindungsgemäße Einachsgerät nur geradeaus rückwärts gefahren werden kann und daß ein Ändern der Fahrtrichtung durch Aufbringen eines Moments auf den Holm nur mit großem Kraftaufwand möglich ist, da die beiden Fahrmotoren mit der exakt gleichen Drehzahl drehen. Aus diesem Grund ist es vorteilhaft, wenn eine die Wirkung des Gleichverteilers aufhebende Verbindung zwischen den von den Fahrmotoren zum Gleichverteiler führenden Leitungen bei Rückwärtsfahrt herstellbar ist, so daß durch Einwirkung auf den Holm eine unterschiedliche Drehzahl der beiden Fahrmotoren möglich ist.

Hierzu ist es beispielsweise denkbar, einen Kurzschlußschieber zwischen den genannten Leitungen vorzusehen, welcher bei Rückwärtsfahrt von Hand oder automatisch, beispielsweise betätigt über einen Steuerhebel des Hydrostaten oder die umgekehrten Druckverhältnisse im Hydrostatenfahrmotor-Kreislauf, bei Rückwärtsfahrt betätigbar ist.

Eine Alternative zum Vorsehen einer Verbindung zwischen den von den Fahrmotoren zum Gleichverteiler führenden Leitungen bei Rückwärtsfahrt stellt eine im Rahmen der Erfindung besonders bevorzugte Lösung dar, bei welcher eine die Wirkung des Gleichverteilers aufhebende Verbindung zwischen einer Mittelzuleitung des Gleichverteilers und den von den Fahrmotoren zum Gleichverteiler führenden Leitungen bei Rückwärtsfahrt herstellbar ist. Diese Verbindung kann beispielsweise dadurch aktivierbar sein, daß diese vor jeder Einmündung in eine der von den Fahrmotoren zum Gleichverteiler führenden Leitungen jeweils ein Rückschlagventil aufweist, welches sich bei der bei Rückwärtsfahrt vorherrschenden Ölstromrichtung öffnet und bei der bei Vorwärtsfahrt vorherrschenden Ölstromrichtung schließt.

Zusätzlich kann diese Verbindung noch mit einem Absperrorgan versehen sein, welches bei Normalbetrieb geöffnet ist, jedoch in seinem geschlossenen Zustand ein Rückwärtsfahren mit gleich schnell drehenden Fahrmotoren,also ähnlich wie bei einer eingelegten Differentialsperre, erlaubt.

Bei den vorstehend beschriebenen Ausführungsbeispielen wurde davon ausgegangen, daß bei Rückwärtsfahrt eine aktive Steuerung des Einachsgeräts über die Fahrmotoren nicht erforderlich und auch nicht erwünscht ist. Alternativ dazu ist es jedoch möglich, Umschaltventile vorzusehen,durch welche die Wirkung des Steuerglieds auf die jeden Fahrmotor durchströmende Ölmenge bei Rückwärtsfahrt umkehrbar ist. Das heißt, daß diese Ventile die Wirkung des Steuerglieds auf den Ölkreislauf bei Rückwärtsfahrt umkehren, so daß eine Lenkung des erfindungsgemäßen Einachsgeräts im gleichen Sinne wie bei Vorwärtsfahrt auch bei Rückwärtsfahrt möglich ist.

Eine konstruktive Realisierungsmöglichkeit der vorstehend beschriebenen Umkehr der Wirkung des Steuerglieds ist dann möglich, wenn die bei Vorwärtsfahrt bestehende Verbindung zwischen jedem Ausgang des Steuerglieds mit der jeweiligen Hydraulikleitung bei Rückwärtsfahrt unterbrechbar und eine Verbindung jedes Ausgangs mit der jeweils anderen Hydraulikleitung herstellbar ist. In diesem Fall wird die Wirkung des Steuerglieds umgekehrt, so daß auch bei umgekehrter Förderung der Ölmenge eine Steuerung der Fahrmotoren im gleichen Sinne wie bei Vorwärtsfahrt möglich ist.

Die Ansteuerung des Steuerventils könnte prinzipiell auch durch einen vom Fahrer des Einachsgeräts bedienbaren, am Holm angebrachten Steuerhebel erfolgen. Dies hat jedoch den Nachteil, daß damit ein zusätzlicher Hebel am Holm angeordnet und bei jeder Kurvenfahrt separat bedient werden muß, so daß damit insgesamt die Betriebssicherheit des erfindungsgemäßen Einachsgeräts leidet. Aus diesem Grund ist es vorteilhaft, wenn die Steuereinheit eine Holmlagerung umfaßt und wenn der Holm in einer Lenkstellung der Holmlagerung gegenüber der Steuereinheit drehbar und das Steuerventil durch eine Drehung des Holms betätigbar ist.

Ein derartig ausgebildetes Einachsgerät beitet also die Möglichkeit, daß die Bedienungsperson einfach den Holm in die gewünschte Richtung bewegt und dadurch das Steuerventil so betätigt, daß das Einachsgerät die durch die Drehrichtung des Holms vorgegebene Kurvenfahrt durchführt.

Als konstruktiv besonders zweckmässige Lösung hat es sich dabei erwiesen, wenn der Holm in der Holmlagerung um eine im wesentlichen senkrecht auf einem Rahmen des Einachsgeräts stehende Achse drehbar ist.

Insbesondere aus Gründen der Fahrsicherheit hat es sich hierbei als zweckmässig erwiesen, wenn der Holm begrenzt drehbar ist, so dass keine allzu starke Verdrehung und auch kein allzu starker Lenkausschlag seitens der Bedienungsperson möglich sind, die dann zu einer abrupten Drehung des Einachsgeräts und infolgedessen zu Unfällen führen könnten.

Da bei dem vorstehend beschriebenen Einachsgerät eine Lenkung zunächst dadurch eingeleitet wird, dass der Holm zur Seite bewegt wird, worauf sich dann das Einachsgerät durch die sich unterschiedlich drehenden Fahrmotoren selbst dreht, besteht nach der seitens des Einaschgeräts durchgeführten Drehung die Gefahr, dass die Bedienungsperson die Geradeausfahrtstellung des Steuerventils mittels des Holms nicht exakt erreicht und somit das Einachsgerät stets in Zick-Zack-Linien fährt. Um dies zu verhindern ist es vorteilhaft, wenn das Steuerventil ein Betätigungselement umfasst, welches über mindestens ein elastisches Element in eine Geradeausfahrtstellung rückstellbar ist, so dass nach Durchführung einer Lenkbewegung stets die Geradeausfahrtstellung wieder auffindbar ist.

Desgleichen ist es wünschenswert, wenn der Ho]m über ein elastisches Element in die Geradeausfahrtstellung rückstellbar ist, so dass durch diese federelastischen Elemente stets die Geradeausfahrtstellung sowohl des Betätigungselements als auch des Holms ohne Einwirkung der Bedienungsperson erreichbar ist.

Eine konstruktiv besonders vorteilhafte Ausführungsform sieht vor, dass zwischen dem Holm und dem Betätigungselement des Steuerventils ein Übertragungselement angeordnet ist.

Beim Vorsehen eines derartigen Übertragungselements hat es sich dann als zweckmässig erwiesen, wenn dieses als den Holm und das Betätigungselement mittels federelastischer Elemente in die Geradeausfahrtstellung zurückführend ausgebildet ist, so dass dieses sowohl die Rückführung des Betätigungselements als auch des Holms in die Geradeausfahrtstellung bewirkt.

Um den Holm für alle Einsatzmöglichkeiten geeignet auszubilden hat es sich als zweckmässig erwiesen, wenn ein Griffteil des Holms um eine parallel zur Fahrebene in Fahrtrichtung verlaufende Achse verstellbar ist und insbesondere auch wenn er zusätzlich noch um eine parallel zur Fahrebene und quer zur Fahrtrichtung verlaufenden Achse verstellbar ist, so dass der Griffteil des Holms für jeden Einsatzzweck so eingestellt werden kann, dass er von der Bedienungsperson in ergonomisch günstiger Weise geführt werden kann.

Bei besonderen Einsätzen des erfindungsgemässen Einachsgeräts, insbesondere mit besonders ausgebildeten Anbaugeräten,hat es sich als günstig erwiesen, wenn der Holm in der Lenksstellung der Holmlagerung in seiner Geradeausfahrtstellung gegenüber der Geradeausfahrtrichtung um einen Winkel verdreht positionierbar ist, d.h. also, dass der Holm, obwohl er in der Geradeausfahrtstellung steht, nicht entgegen zur Geradeausfahrtrichtung nach hinten über das Einachsgerät übersteht, sondern beispielsweise zur rechten oder linken Seite verschwenkt nach hinten über das Einachsgerät übersteht, so dass die Bedienungsperson seitlich des Einachsgeräts gehen kann.

Ferner kann es bei besonderen Arbeitsgängen erwünscht sein, wenn keine Lenksteuerung über die Holmbewegung erfolgt, sondern wenn das erfindungsgemässe Einachsgerät so angetrieben wird, dass es geradeaus fährt. Für diese Arbeiten ist es dann zweckmässig, wenn die Holmlagerung eine den Holm drehfest an der Zentraleinheit festlegende Stellung aufweist, so dass geringfügige Änderungen der Fahrtrichtung durch eine drehende Einwirkung auf das gesamte Einachsgerät über den Holm erfolgen.

Um den Holm nun in die einzelnen Richtungen verstellen zu können, ist es von Vorteil, wenn die Holmlagerung eine frei drehende Stellung aufweist, in welcher der Holm gegenüber der Steuereinheit und dem Betätigungselement des Steuerventils sowie dem Rahmen frei drehbar ist.

Eine konstruktiv einfache und äusserst robuste Version des erfindungsgemässen Einbaugeräts sieht vor, dass die Holmlagerung ein an einem an der Zentraleinheit gelagerten Ende des Holms drehfest gehaltenes und längs einer Drehachse des Holms verschiebliches Getriebeelement umfasst. Somit ist es möglich, dass das Getriebeelement durch Verschieben in eine der Lenkstellung der Holmlagerung entsprechende Stellung überführbar ist, in welcher mit diesem Getriebeelement das Betätigungselement des Steuerventils verstellbar ist.

Desgleichen ist es möglich, wenn das Getriebeelement durch Verschieben in die der frei drehenden Stellung der Holmlagerung entsprechende Stellung überführbar ist, in welcher dieses Getriebeelement frei drehbar ist.

Ferner ist es möglich, dass das Getriebeelement durch Verschieben in die der drehfesten Stellung der Holmlagerung entsprechende Stellung überführbar ist, in welcher es mit einem an der Steuereinheit angeordneten Gegenstück in Eingriff ist, so daß der Holm drehfest mit der Steuereinheit und damit zwangsläufig auch drehfest mit der Zentraleinheit verbunden ist.

Bei den vorstehend beschriebenen Ausführungsbeispielen des erfindungsgemäßen Einachsgeräts wurde nun die Lenkung des Einachsgeräts eingehend beschrieben.

Die Steuerung der Fahrtgeschwindigkeit über den Hydrostat kann dabei in der bekannten Art und Weise erfolgen. Hierbei wird üblicherweise ein eine Schwenkwiege einer Axialkolbenpumpe des Hydrostaten verkippender Steuerhebel betätigt, welcher von einer Nullstellung durch Verschwenken in einer Richtung in die Vorwärtsfahrtstellung und durch Verschwenken entgegengesetzt dazu in die Rückwärtsfahrtstellung bringbar ist, was zur Folge hat, daß der Hydrostat in der Nullstellung des Steuerhebels keine Ölmenge fördert, in der Vorwärtsfahrtstellung in einer Richtung die Ölmenge fördert und in der Rückwärtsfahrtstellung die Förderrichtung umkehrt, d.h. also die Ölmenge in der gerade umgekehrten Richtung fördert.

Die Betätigung des erfindungsgemäß verwendeten Hydrostaten mit direkt verstellbarer Schwenkwiege der Axialkolbenpumpe über diesen Steuerhebel hat jedoch den Nachteil, daß dann, wenn große Antriebsleistungen erforderlich sind, welche das beispielsweise von den Fahrmotoren maximal aufbringbare Drehmoment übersteigen, die Fahrmotoren stehen bleiben, obwohl der Hydrostat weiter Öl fördert, so daß entweder der Antriebsmotor des Hydrostaten zum Stillstand kommt oder eine Überhitzung des gesamten Ölkreisklaufs die Folge sein kann, die wiederum zu Beschädigungen am Hydrostaten führt.

Aus diesem Grund ist eine Aufgabe der vorstehenden Erfindung darin zu sehen, eine Möglichkeit zu finden, derartige Überlastzustände des Hydrostaten zu vermeiden.

Diese Aufgabe wird erfindungsgemäß dadurch gelöst, daß ein Steuerhebel des Hydrostaten in Richtung seiner Vorwärtsfahrtstellung durch ein federelastisches Verstellglied beaufschlagt ist und daß eine Handbetätigungseinrichtung vorgesehen ist, mit welcher eine Auslenkung des Steuerhebels in Richtung der Vorwärtsfahrtstellung begrenzbar ist. Diese Erfindung ist nicht eingeschränkt auf Einachsgeräte, sondern kann bei sämtlichen mit einem hydrostatischen Fahrantrieb versehenen Fahrzeugen, insbesondere auch Schleppfahrzeugen, eingesetzt werden.

Der Vorteil dieser Erfindung ist darin zu sehen, daß dann, wenn ausgangsseitig am Hydrostaten der Gegendruck ansteigt, die auf den Steuerhebel ebenfalls wirkende Kraft dazu ausgenützt werden kann, daß sich der Steuerhebel entgegen der Kraft des federelastischen Verstellglieds in Richtung seiner Nullstellung bewegt und damit selbstätig die Fördermenge des Hydrostaten herabsetzt, so daß eine Überhitzung des Ölkreislaufs vermieden wird. Über die Kraft des federelastischen Verstellglieds ist somit exakt der Öldruck vorwählbar, ab welchem der Hydrostat selbsttätig die geförderte Ölmenge reduziert und damit eine Überhitzung des Ölkreislaufs vermeidet. Diese Art der Steuerung des Hydrostaten schränkt damit in keiner Weise jedoch den Bedienungskomfort eines derart getriebenen Fahrzeugs ein.

Besonders zweckmäßig ist es, wenn das federelastische Verstellglied einstellbar ist, so daß sich insbesondere die Federkraft und die Kennlinie von Federkraft und Auslenkung entsprechend dem jeweiligen Anwendungsfall einstellen lassen.

Für den Bedienungskomfort hat es sich auch als vorteilhaft erwiesen, wenn der Steuerhebel durch die Handbetätigungseinrichtung in Richtung einer Rückwärtsfahrtstellung bewegbar und federelastisch in seiner Nullstellung beaufschlagbar ist, so daß niemals der Fall eintreten kann, daß das Fahrzeug selbstätig rückwärts fährt, sondern die Rückwärtsfahrtstellung nur durch Überwinden der von dem federelastischen Element ausgeübten Gegenkraft einstellbar ist.

Um in einfacher Weise die Nullstellung erreichen und auch festhalten zu können, hat es sich als zweckmäßig erwiesen, wenn die Handbetätigungseinrichtung eine eine Bewegung des Steuerhebels aus seiner Nullstellung in Richtung seiner Vorwärtsfahrtstellung verhindernde lösbare Raste aufweist, so daß der Steuerhebel niemals selbsttätig in die Vorwärtsfahrtstellung ausgelenkt werden kann und insbesondere zusätzlich die Möglichkeit besteht, daß der Steuerhebel niemals selbsttätig in die Vorwärtsfahrtstellung ausgelenkt werden kann und insbesondere zusätzlich die Möglichkeit besteht, daß der Steuerhebel durch das federelastische Element aus der Rückwärtsfahrtstellung in die Nullstellung dann bewegt wird, wenn keine Handbetätigung erfolgt.

Aus Sicherheitsgründen ist jedoch bei einem weiteren Ausführungsbeispiel auch vorgesehen, daß die lösbare Raste sowohl eine Bewegung in Vorwärtsfahrtstellung als auch in Rückwärtsfahrtstellung verhindert.

Insbesondere beim Einsatz der vorstehend beschriebenen Lösung im Zusammenhang mit einem Einachsgerät hat es sich als zweckmäßig erwiesen, wenn die Handbetätigungseinrichtung einen Handhebel umfaßt, welcher über ein Zugelement mit dem Steuerhebel des Hydrostaten verbunden ist, und wenn ausgehend von einer Nullstellung in einer losgelassenen Stellung des Handhebels der Steuerhebel des Hydrostaten in Vorwärtsfahrtstellung ausgelenkt ist.

Noch vorteilhafter läßt sich die Bedienung des erfindungsgemäßen Einachsgeräts dann gestalten, wenn der Handhebel ein einem Handgriff des Holms zugeordneter, in Richtung auf den Handgriff zu betätigender und vom Handgriff weg loszulassender Handhebel ist.

Um mit einer derartigen Konstruktion eine Maximalgeschwindigkeit des Einachsgeräts variabel einzustellen, ist es von großem Vorteil, wenn dem Handhebel ein Verschwenken desselben in Richtung seiner losgelassenen Stellung begrenzendes Anschlagelement zugeordnet ist.

Bei einem derartigen Anschlagelement ist zweckmäßigerweise vorgesehen, daß das Anschlagelement ein am Handgriffanfang angeordneter drehbarer Ring mit einem schräg zu einer senkrecht auf dessen Drehachse stehenden Ebene verlaufenden Stirnflächenbereich ist, an welchem der Handhebel mit einem Nocken in seiner losgelassenen Stellung anliegt.

Insbesondere bei einem Einachsgerät läßt sich zusätzlich die Bedienungssicherheit und damit die Unfallsicherheit dadurch verbessern, daß der Handhebel in einer den Verstellhebel des Hydrostaten in seiner Nullage haltenden Stellung arretierbar ist.

Bei dieser beschriebenen Handhebelkonstruktion ist es ferner von Nutzen, wenn in einer ausgehend von der Nullstellung betätigten Stellung des Handhebels der Steuerhebel in Rückwärtsfahrtrichtung ausgelenkt ist.

Handgeführte Motorfahrzeuge und -geräte sollten aus Sicherheitsgründen mit einer Einrichtung versehen sein, welche den Motor dann abstellt, wenn eine Handführung nicht mehr gegeben ist. Derartige bekannte Einrichtungen sehen in der Regel eine Reißleine vor, welche an der Bedienungsperson festzumachen ist und dann, wenn diese das Motorfahrzeug oder -gerät nicht mehr führt,einen Schalter betätigt, welcher den Antriebsmotor abstellt.

Das Anbringen einer derartigen Reißleine an der Bedienungsperson ist jedoch lästig und führt dazu, daß es in der Regel nicht erfolgt. Der Erfindung liegt daher weiterhin die Aufgabe zugrunde, eine derartige Einrichtung derart zu verbessern, daß diese die Verwendung einer solchen Reißleine nicht mehr notwendig macht.

Diese Aufgabe wird erfindungsgemäß dadurch gelöst, daß eine Totmannschaltung vorgesehen ist, welche beide Handgriffe sowie einen Steuerhebel der Antriebseinheit abtastet und welche den Antriebsmotor abstellt, wenn bei aus der Nullstellung ausgelenktem Steuerhebel der Antriebseinheit nicht mindestens ein Handgriff von einer Hand einer Bedienungsperson umfaßt ist.

Eine derartige Totmannschaltung findet auch insbesondere vorteilhaft bei einem erfindungsgemäßen Einachsgerät Verwendung.

Eine derartige Totmannschaltung hat den großen Vorteil, daß sie anders als die bisher bekannten Totmannschaltungen kein zusätzliches zur Bedienungsperson geführtes und mit dieser verbundenes Zugseil erfordert, welches den Verbrennungsmotor dann abstellt, wenn die Bedienungsperson sich vom Einachsgerät entfernt.

Eine besonders einfache Art einer erfindungsgemäßen Totmannschaltung sieht dabei vor, daß dann, wenn der Steuerhebel aus der Nullstellung ausgelenkt und keiner der Handgriffe betätigt ist, ein Unterbrecher des Antriebsmotors kurzgeschlossen ist, wobei dies am einfachsten dadurch erreichbar ist, daß bei außerhalb der Neutralstellung stehendem Steuerhebel ein diesem zugeordneter Kontakt geschlossen ist, daß bei an keinem der Handgriffe angelenkter Hand ebenfalls ein Kontakt geschlossen ist und daß beide Kontakte hintereinander geschaltet sind. Somit ist dann, wenn entweder der Steuerhebel in der Neutralstellung steht oder an eine der Handgriffe eine Hand anliegt, einer der beiden Kontakte geöffnet, so daß der Unterbrecherkontakt selbst nicht mehr überbrückt ist und der Antriebsmotor laufen kann.

Die Abtastung der Handgriffe kann auf unterschiedliche Art und Weise erfolgen. So wäre es beispielsweise möglich, an den Handgriffen Schalter anzubringen, die von der Bedienungsperson beim Fassen der Handgriffe zwangsläufig betätigt werden.

Besonders geeignet ist jedoch ein Ausführungsbeispiel, bei welchem jeder Handgriff eine durch Handanlegen volumenveränderliche Verdrängungskammer aufweist, welche mit einem Drucksensor in Verbindung steht, der seinerseits bei deformierter Verdrängungskammer das den umfaßten Handgriff meldende Signal auslöst. Diese Verdrängungskammer kann mit flüssigen oder gasförmigen Medien, insbesondere Luft, gefüllt sein. Der Vorteil dieses Ausführungsbeispiels ist darin zu sehen, daß kein zusätzlicher Schalter am Handgriff betätigt werden muß, sondern daß dieses die Tatsache ausnützt, daß zur Führung des handgeführten Motorfahrzeugs oder -geräts stets ein festes Umfassen des Handgriffs erforderlich ist, so daß dieses dazu ausgenützt werden kann, um das erforderliche Signal auszulösen.

Ein weiteres vorteilhaftes, insbesondere ohne Kraftaufwand seitens der Bedienungsperson zu betätigendes Ausführungsbeispiel sieht vor, daß jeder Handgriff in seinem beim Handanlegen übergriffenen Bereich einen Fotosensor umfaßt, der bei aufgelegter Hand abgedeckt ist und das den umfaßten Handgriff meldende Signal auslöst. Hierbei kann der Fotosensor so ausgebildet sein, daß er die Umgebungslichtstrahlung detektiert, wobei diese Umgebungslichtstrahlung einerseits von Tageslicht kommen kann. Zweckmäßigerweise ist jedoch vorgesehen, daß die Umgebungslichtstrahlung von einer dem Fotosensor gegenüberliegend angeordneten Lichtquelle kommt, bei welcher es sich beispielsweise um eine Infrarotlichtquelle handeln kann, die vorzugsweise vor dem Handgriff angeordnet ist, so daß die den Handgriff umfassende Hand den Lichtweg zwischen dieser Lichtquelle und dem Fotosensor unterbricht.

Desgleichen sind weitere Möglichkeiten denkbar, wie die Stellung des Steuerhebels abgefragt werden kann. Eine besonders vorteilhafte Möglichkeit sieht vor, daß der Steuerhebel mit einer mit diesem gemeinsam verschwenkbaren Kontaktfläche versehen ist, an welcher ein Kontaktfinger anliegt, und daß die Kontaktfläche so ausgebildet ist, daß in der Nullstellung des Steuerhebels kein elektrischer Kontakt zwischen dieser und dem Kontaktfinger herstellbar ist, während außerhalb der Nullstellung ein Kontakt besteht. Dieselbe Anordnung kann im Rahmen der vorliegenden Erfindung auch umgekehrt getroffen sein, so daß lediglich in der Nullstellung ein Kontakt besteht, während bei außerhalb der Nullstellung stehendem Steuerhebel kein Kontakt vorliegt.

Alternativ dazu hat sich aber auch eine Konstruktion als günstig erwiesen, bei welcher der Steuerhebel mit einer einen Taster betätigenden und zu der Nullstellung symmetrischen Kulisse versehen ist, so daß jegliche Auslenkungen des Steuerhebels aus der Nullstellung über die Kulisse auf den Taster übertragen werden. Hierbei kann der Taster so ausgebildet sein, daß er mit der Kulisse dann einen elektrischen Kontakt herstellt, wenn der Steuer|hebel aus der Nullstellung ausgelenkt ist oder umgekehrt, und über die diese Art der Herstellung des elektrischen Kontakts die Stellung des Steuerhebels für die Totmannschaltung erfaßbar ist. Es ist aber auch möglich, den Taster als mechanischen Taster auszubilden u:nd die Kulisse gegenüber der Nullstellung erhaben auszubilden oder umgekehrt, so daß der Taster bei Auslenkung aus der Nullstellung betätigt ist.

Bei den bekannten Einachsgeräten wird häufig die Forderung erhoben, daß diese mit einer Sitzmöglichkeit versehen sein sollten, um insbesondere bei lang andauernden Pflegearbeiten, beispielsweise im gärtnerischen Bereich, eine Ermüdung der Bedienungsperson durch das ständige Hinterhergehen zu verhindern. Aus diesem Grund sieht ein erfindungsgemäßes Ausführungsbeispiel des Einachsgeräts vor, daß dieses mit einer radgestützten Sitzeinheit versehen ist.

Diese Sitzeinheit ist bevorzugterweise so ausgebildet, dass sie eine um eine zur Fahrebene senkrechte Achse frei drehbare Radeinheit umfasst, so dass die radgestützte Sitzeinheit sämtlichen Lenkbewegungen des Einachsgeräts, beispielsweise erzeugt durch die erfindungsgemässe Steuerung der beiden Fahrmotoren folgen kann. In diesem Fall ist also die Sitzeinheit nicht, wie aus dem Stand der Technik bekannt, gegenüber dem Einachsgerät in Längsrichtung abknickend angeordnet, so dass sich bei Kurvenfahrt ein Knick zwischen der Längsrichtung der Sitzeinheit und dem Einachsgerät bildet, sondern die Sitzeinheit ist in Fahrtrichtung starr mit dem Einachsgerät verbunden und schwenkt mit diesem mit, so dass die als sehr unfallträchtig bekannte Knickung zwischen der Sitzeinheit und dem Einachsgerät nicht mehr auftritt.

Um jedoch bei einer derartigen Sitzeinheit beispielsweise ein Anheben eines als Anbaugerät dienenden Mähwerks zu ermöglichen, ist vorgesehen, dass die Sitzeinheit gegenüber dem Einachsgerät um eine zu dessen Achse parallele Achse schwenkbar ist. Damit lassen sich in vorteilhafter Weise sämtliche Anbaugeräte anheben und auch Geländeunebenheiten problemlos auslegen, ohne dass die Fahrsicherheit gefährdet ist.

Weitere Merkmale und Vorteile der vorliegenden Erfindung sind Gegenstand der nachfolgenden zeichnerischen Darstellung sowie der Beschreibung einiger Ausführungsbeispiele. In der Zeichnung zeigen:
- Fig. 1: eine perspektivische Gesamtansicht eines erfindungsgemäßen Einbaugeräts;
- Fig. 2: einen Schnitt längs Linie 2-2 in Fig. 1;
- Fig. 3: eine Seitenansicht eines zweiten Ausführungsbeispiels in Richtung des Pfeils A in Fig. 1;
- Fig. 4: eine Seitenansicht ähnlich Fig. 2 eines dritten Ausführungsbeispiels;
- Fig. 5: eine Seitenansicht einer Steuereinheit in Lenkstellung;
- Fig. 6: eine Draufsicht auf die Steuereinheit in Lenkstellung;
- Fig. 7: eine Seitenansicht der Steuereinheit in einer frei drehenden Stellung;
- Fig. 8: eine Seitenansicht der Steuereinheit in einer drehfesten Stellung;
- Fig. 9: eine schematische Darstellung einer ersten Möglichkeit eines gesteuerten Hydraulikkreislaufs zum Fahrantrieb;
- Fig 10: eine Darstellung ähnlich Fig. 9 einer zweiten Möglichkeit;
- Fig 11: eine Darstellung ähnlich Fig. 9 einer dritten Möglichkeit;
- Fig 12: eine Darstellung ähnlich Fig. 9 einer vierten Möglichkeit;
- Fig 13: eine schematische Darstellung der Steuerung des Hydrostaten mittels einer Betätigungseinrichtung;
- Fig 14: eine perspektivische Seitenansicht von hinten eines dritten Ausführungsbeispiels des erfindungsgemäßen Einachsgeräts;
- Fig 15: einen Ausschnitt aus dem Bereich B in Fig. 12;
- Fig 16: eine schematische Darstellung eines ersten Ausführungsbeispiels einer erfindungsgemäßen Totmannschaltung;
- Fig 17: eine schematische Darstellung einer ersten Variante einer erfindungsgemäßen Handgriffabfrage;
- Fig 18: eine schematische Darstellung einer zweiten Variante der Handgriffabfrage;
- Fig 19: eine schematische Darstellung eines zweiten Ausführungsbeispiels der Totmannschaltung ähnlich Fig. 16.

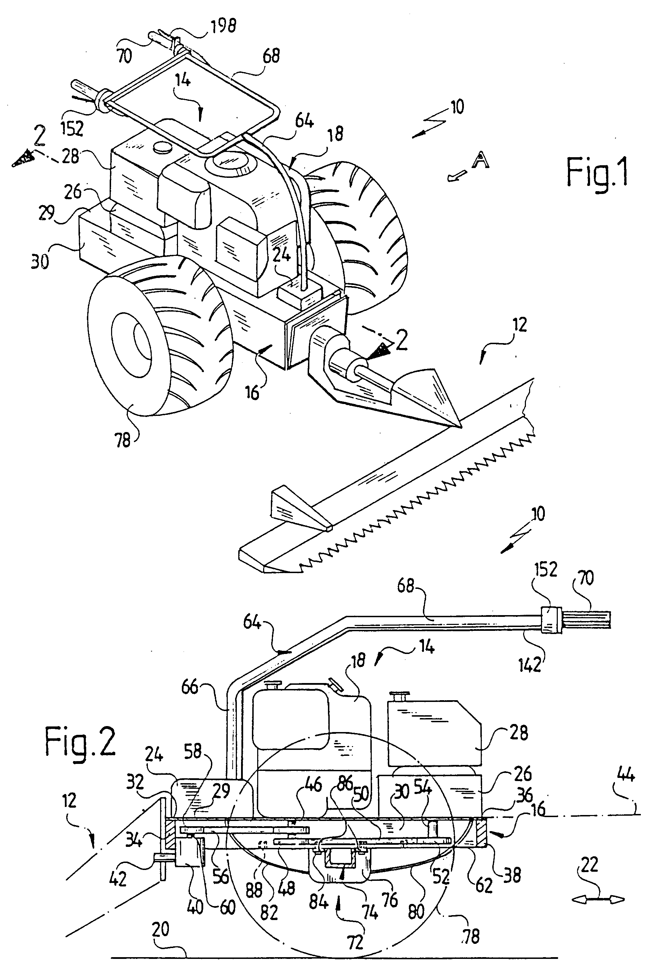

An ein als Ganzes mit 10 bezeichnetes Ausführungsbeispiel des erfindungsgemäßen Einachsgeräts ist - wie in Fig. 1 dargestellt - als Anbaugerät ein als Ganzes mit 12 bezeichnetes Mähwerk montiert.

Das erfindungsgemäße Einachsgerät 10 zeigt, wie insbesondere in Fig. 2 zu sehen ist, eine als Ganzes mit 14 bezeichnete Zentraleinheit mit einem Rahmen 16, welcher in einer normalen Fahrstellung des Einachsgeräts 10 ungefähr horizontal und ungefähr parallel zu einer Fahrebene 20, auf welcher sich das Einachsgerät 10 bewegt, ausgerichtet ist. Auf diesem Rahmen 16 ist mittig ein Verbrennungsmotor 18, in Fahrtrichtung 22 gesehen vor diesem Verbrennungsmotor 18 eine Steuereinheit 24 und hinter diesem Verbrennungsmotor 18 ein eine Axialkolbenpumpe umfassender Hydrostat 26 angeordnet, der seinerseits auf seiner dem Rahmen 16 abgewandten Seite einen Öltank 28 trägt. Der Rahmen 16 ist vorzugsweise aus einem Bodenteil 29 mit zwei jeweils längsseits zur Fahrebene 20 hin umgebogenen, ungefähr parallel zur Fahrtrichtung 22 ausgerichteten und im Abstand voneinander angeordneten Längsträgern 30 und einem diese Längsträger 30 an einem vorderen Ende 32 miteinander verbindenden Querträger 34 sowie einem die beiden Längsträger 30 an ihrem hinteren Ende 36 verbindenden Querträger 38 aufgebaut.

Zum Antrieb von am vorderen Ende 32 des Rahmens 16 montierbaren Anbaugeräten, wie beispielsweise dem in Fig. 1 dargestellten Mähwerk 12, ist im Bereich des vorderen Endes 32 ein unterhalb des Boden 29 angeordnetes Zapfwellengetriebe 40 mit einer in Fahrtrichtung 22 über den Querträger 34 des Rahmens 16 vorstehenden Zapfwelle 42 vorgesehen.

Der Verbrennungsmotor 18 ist mit einer senkrecht auf einer durch den Boden 29 festgelegten Ebene 44 stehenden und in ein Inneres des Rahmens 16 hineinragenden Antriebswelle 46 versehen, auf welcher eine Doppelriemenscheibe 48 drehfest gehalten ist. Von dieser Doppelriemenscheibe 48 läuft ein Treibriemen 50 parallel zur Ebene 44 zu einer Antriebsriemenscheibe 52, welche drehfest auf einer ebenfalls senkrecht zur Ebene 44 verlaufenden und in ein Inneres des Rahmens 16 hineinragenden Antriebswelle 54 des Hydrostaten 26 sitzt. Ferner verläuft von der Doppelriemenscheibe 48 ein Treibriemen 56 zu einer Antriebsriemenscheibe 58, welche ihrerseits drehfest auf einer senkrecht zur Ebene 44 verlaufenden Antriebswelle 60 des Zapfwellengetriebes 40 sitzt, welche sich, da das Zapfwellengetriebe 40 an eiher Unterseite 62 des Rahmens 16 montiert ist, sich von unten in ein Inneres des Rahmens 16 erstreckt.

Damit ist ein mechanischer Antrieb sowohl des Hydrostaten 26 als auch des Zapfwellengetriebes mittels des Verbrennungsmotors 18 möglich.

Ferner umfaßt die Zentraleinheit 14 noch einen Holm 64, welcher im Bereich der Steuereinheit 24 in nachfolgend im einzelnen beschriebener Art und Weise an dem Rahmen 16 gehalten ist, sich senkrecht zur Ebene 44 von dem Rahmen 16 in einem senkrechten Stück 66 von der Fahrtebene 20 weg nach oben erstreckt und ungefähr oberhalb des Verbrennungsmotors 18 eine Gabel 68 bildet, welche in zwei Handgriffen 70 für eine Bedienungsperson ausläuft.

An dieser Zentraleinheit 14 ist lösbar eine Achseinheit 72 montiert, welche eine quer zur Fahrtrichtung 22 stehende Radachse 74 aufweist, die an ihren beiden äusseren Enden jeweils mit einem hydraulischen Fahrmotor 76 für das diesem Ende jeweils zugeordnete Rad 78 versehen ist. Jeder der Fahrmotoren 76 ist über eigene Hydraulikleitungen 80 und 82 mit dem Hydrostat bzw. der Steuereinheit 24 verbunden.

In dem in Fig. 2 dargestellten Ausführungsbeispiel ist die Achseinheit 72 an der Unterseite 62 des Rahmens 16 mittels Schrauben 84 gehalten, welche an die Achse 74 angeformte Laschen 86 durchgreifen und in entsprechende Gewindebohrungen 88 in den Längsträgern 30 des Rahmens 16 eingeschraubt sind.

Da als Verbindung zwischen der Achseinheit 72 und der Zentraleinheit 14 zum Antrieb des gesamten Einachsgeräts 10 lediglich die insbesondere flexibel ausgeführten Hydraulikleitungen 80 bzw. 82 für jeden Fahrmotor 76 erforderlich sind, kann die Achseinheit 72 relativ zur Zentraleinheit 14 in Fahrtrichtung 22 gesehen an unterschiedlichen Positionen angeordnet sein, so daß sich, beispielsweise entsprechend dem jeweiligen Anbaugerät, die Zentraleinheit 14 so auf die Achseinheit 72 montieren läßt, daß der Schwerpunkt der Zentraleinheit 14 im wesentlichen über der Radachse 74 oder definiert vor oder hinter dieser Radachse 74 liegt.

Beim in Fig. 2 dargestellten Ausführungsbeispiel sind hierzu in die Längsträger 30 des Rahmens 16 von der Oberseite 62 her mehrere Gewindebohrungen 88, beispielsweise im Rasterabstand, angebracht, so daß zum Versetzen der Radachse 74 lediglich die Schrauben 84 gelöst oder jeweils andere Gewindebohrungen 88 eingeschraubt werden müssen.

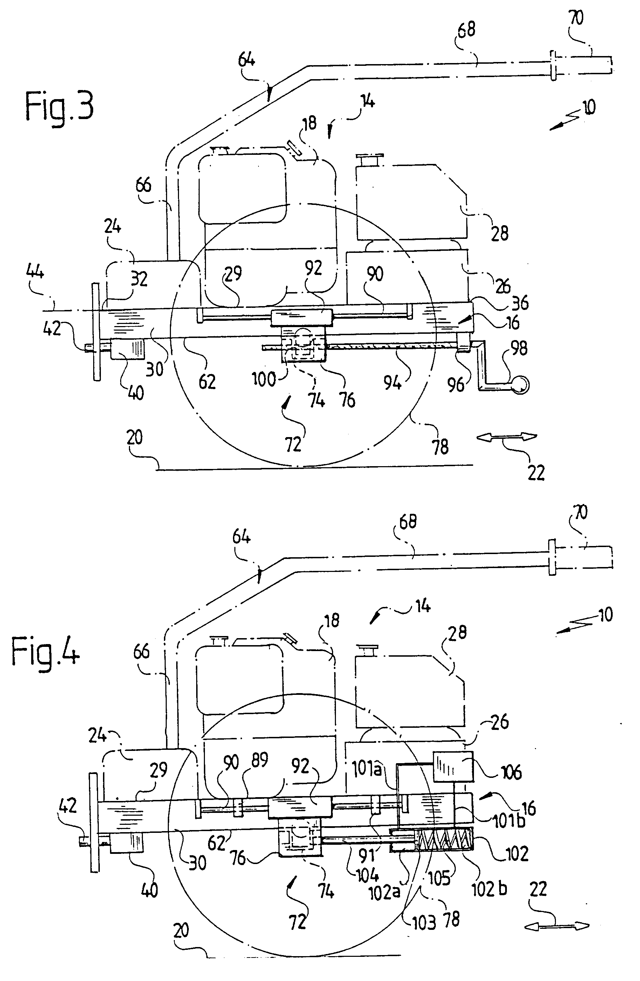

Eine andere Möglichkeit, die Achseinheit 72 relativ zur Zentraleinheit 14 zu verschieben, ist anhand eines zweiten Ausführungsbeispiels in Fig. 3 dargestellt, das, insoweit als dieselben Bezugszeichen verwendet sind, mit dem ersten Ausführungsbeispiel, dargestellt in den Fig. 1 und 2, identisch ist.

Bei diesem Ausführungsbeispiel sind die Längsträger 30 mit sich im Abstand von diesen und längs derselben erstreckenden Führungsstäben 90 versehen. Diese Führungsstäbe 90 können beispielsweise an einer Außenseite der Längsträger 30 des Rahmens 16 vorgesehen sein, jedoch ebenfalls an einer Innenseite oder an einer Unterseite der Längsträger 30. An jedem der Führungsstäbe 90 ist gleitend eine Führungsbüchse 92 gelagert, welche mit der Radachse 74 fest verbunden ist. Damit kann die Zentraleinheit 14 durch die auf den Führungsstäben 90 gleitenden Führungsbüchsen relativ zur Achseinheit 72 verschoben werden.

Um die Achseinheit 72 in bestimmten Positionen relativ zur Zentraleinheit 14 zu fixieren, ist eine parallel zu den Längsträgern 30, beispielsweise entlang einer Längsmittellinie des Rahmens 16 ausgerichtete Spindel 94 vorgesehen, welche sich bis zum hinteren Ende 36 des Rahmens 16 erstreckt und im Bereich desselben in einem Lagerblock 96 drehbar, jedoch in ihrer Längsrichtung relativ zum Rahmen 16 unverscliebhich gelagert ist. Des weiteren trägt die Spindel 94 an ihrem über den Lagerblock .96 nach hinten überstehenden Ende eine Handkurbel 98. Die Spindel 94 kann vorzugsweise so angeordnet sein, daß sie die Radachse 74 in einer der Spindel 94 entsprechenden Gewindebohrung 100 durchdringt und in Richtung des vorderen Endes 32 des Rahmens 16 über die Radachse 74 übersteht. Somit kann durch Drehen der Handkurbel 98 und somit Drehen der Spindel 94 die Radachse 74 und somit die Achseinheit 72 in Fahrtrichtung oder entgegengesetzt dazu relativ zur Zentraleinheit 14 verschoben werden.

Eine weitere Möglichkeit der Relativverschiebung der Achseinheit 72 gegenüber der Zentraleinheit 14 ist anhand eines dritten Ausführungsbeispiels in Fig. 4 dargestellt. Bei diesem dritten Ausführungsbeispiel ist die Achseinheit 72 ebenfalls an den Führungsstäben 90 über Führungsbüchsen 92 gelagert. Im Gegensatz zum zweiten Ausführungsbeispiel ist beim dritten Ausführungsbeispiel allerdings die Spindel 94 durch einen Hydraulikzylinder 102 ersetzt, welcher im Bereich des hinteren Endes 36 des Rahmens 16 gehalten ist und einen Kolben 103 mit einer Kolbenstange 104 aufweist, die sich in Richtung der Radachse 74 erstreckt und mit dieser verbunden ist. Die Verschiebung der Radachse 74 und somit der Achseinheit 72 erfolgt durch Verschieben des Kolbens 103 des Hydraulikzylinders 102.

Die Verschiebung der Achseinheit 72 ist beispielsweise über einen Regler 106 steuerbar, durch welchen ein erster Zylinderraum 102a mit dem Hydrostat 26 über eine Druckleitung 101a druckseitig und ein diesem ersten Zylinderraum 102a gegenüberliegender Zylinderraum 102b über eine Druckleitung 101b mit dem Hydrostat rücklaufseitig verbindbar ist oder umgekehrt, so daß jeweils der Kolben 103 und somit die Achseinheit 72 verschiebbar ist.

Eine im Rahmen der vorliegenden Erfindung besonders vorteilhafte dynamische Verstellung der Achseinheit 72 in Abhängigkeit von dem durch die Radmotoren 76 auf das Einachsgerät 10 als Ganzes wirkenden und von einer Bedienungsperson über den Holm 68 abzustützenden Drehmoment ist ebenfalls mittels des Hydraulikzylinders 102, gesteuert durch den Regler 106, möglich. Dieser Fahrzustand kommt insbesondere dann vor, wenn mit dem Einachsgerät 10 einen Hang hochgefahren werden soll. In diesem Fall hat die Bedienungsperson über den Holm 68 ein wesentlich höheres Gegendrehmoment abzustützen.

Um diese dynamische Verstellung der Achseinheit 72 zu ermöglichen, ist in dem Zylinderraum 102 b des Hydraulikzylinders 102 eine den Kolben 103 beaufschlagende Feder 105 vorgesehen, welche bestrebt ist, den Zylinderraum 102a zu verkleinern. In diesem Fall wirkt der Hydraulikzylinder 102 selbst als Regeleinheit, da sich am Kolben 103 ein Kräftegleichgewicht zwischen dem den Kolben 103 von seiten des den Zylinderraums 102a beaufschlagenden Druck einerseits und dem den Kolben 103 seitens des Zylinderraumes 102b beaufschlagenden Druck und der Federkraft andererseits einstellt, so daß bei Erhöhung der Druckdifferenz zwischen dem Zylinderraum 102a und dem Zylinderraum 102b je nach dem wie groß die Kraft der Feder 105 ist, der Kolben 103 gegen die Kraft dieser Feder 105 verschoben wird oder nicht.

Die Feder 105 ist, um eine dynamische Verstellung der Achseinheit 72 zu erreichen, so zu wählen, daß sie bei kleinem Gegendrehmoment und folglich geringem Druck am druckseitigen Ausgang des Hydrostaten 26 den Kolben 103 und somit auch die Achseinheit 72 in ihrer vordersten Endstellung hält, die beispielsweise durch Anschläge 89 an den Führungsstäben 90 festlegbar ist. Steigt nun das Gegendrehmoment an, so steigt gleichzeitig der Druck am druckseitigen Ausgang des Hydrostaten 26 an und somit auch im druckseitig verbunden Zylinderraum 102a, so daß auf den Kolben 103 eine größere Kraft wirkt. Damit stellt sich am Kolben 103 ein neues Kräftegleichgewicht dadurch ein, daß der Kolben von der vordersten Endposition weg in Richtung einer hinteren Endposition unter Verkleinerung des Zylinderraums 102a so weit verschoben wird bis die von der stärker gespannten Feder 105 und dem Druck im Zylinderraum 102b auf den Kolben 103 wirkende Kraft gleich der durch den Druck im Zylinderraum 102a auf den Kolben 103 wirkenden Kraft ist. Damit wird die Achseinheit 72 entsprechend der neuen Gleichgewichtsstellung des Kolbens 103 von der durch die Anschläge 89 festgelegten vordersten Endstellung weg in Richtung einer hinteren Endstellung bewegt. Eine Druckerhöhung am druckseitigen Ausgang des Hydrostaten 26 führt so lange zu einer Verschiebung der Achseinheit 72 von der vordersten Endstellung weg, bis diese in ihrer hinteren Endstellung steht, welche ebenfalls durch Anschläge 91 an den Führungsstäben 90 festlegbar ist.

Durch das Zurückschieben der Achseinheit 72 von der vordersten Endstellung weg wird der Schwerpunkt des Einachsgeräts 10 - in Vorwärtsfahrrichtung 22 gesehenvor die Radachse 74 verlegt, so daß damit - gleichzeitig das Einachsgerät 10 selbst ein größeres Gegendrelhmoment aufbringt und die Bedienungsperson dieses Einachsgeräts 10 am Holm 68 mit einer geringeren Kraft abstützen muß.

Somit ermöglicht die Erfindung die von einer Bedienungsperson am Holm 68 aufzubringende Abstützkraft zur Erzeugung des notwendigen Gegendrehmoments in gewissen Grenzen automatisch zu regeln.

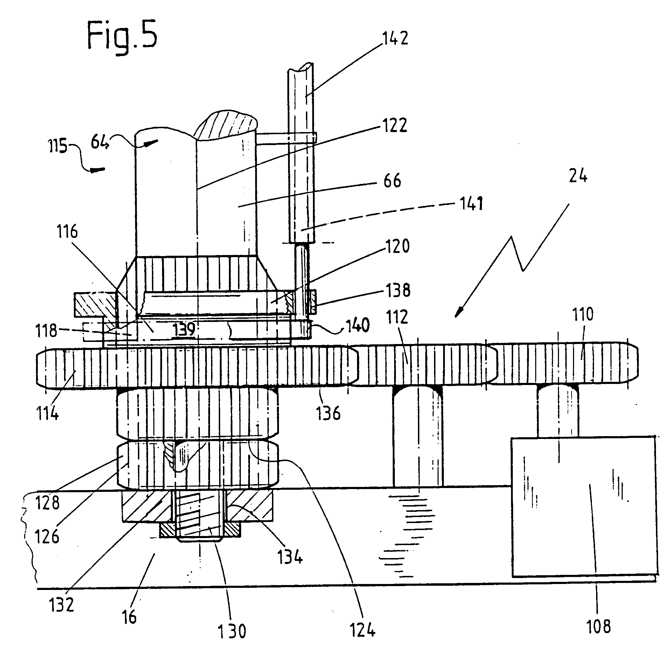

Die als Ganzes mit 24 bezeichnete Steuereinheit in Fig. 5 umfaßt ein Steuerventil 108 mit einem als Zahnrad ausgebildeten Betätigungselement 110, welches über ein ebenfalls als Zahnrad ausgebildetes Übertragungselement 112 durch ein auf dem senkrechten Stück 66 des Holms 64 sitzendes Zahnritzel 114 betätigbar ist. Dieses Zahnritzel 114 ist Teil einer als Ganzes mit 115 bezeichneten Holmlagerung. Diese umfaßt neben dem Zahnritzel 114 eine einstückig mit diesem verbundene Hülse 116, die eine Innenverzahnung 118 trägt, welche ihrerseits in eine Außenverzahnung 120, angebracht an einem unteren Ende des senkrechten Stücks 66, eingreift und auf dieser Außenverzahnung koaxial zu dem senkrechten Stück 66 längs dessen Achse 122 verschieblich ist.

Außerdem umfaßt die Holmlagerung 115 ein dem Rahmen 16 zugewandtes Ende 124 des senkrechten Stücks 66, welches stirnseitig auf einem drehfest und mittig des Rahmens 16 angeordneten Zahnkranz 126 sitzt, dessen Außenverzahnung 128 mit der Außenverzahnung 120 des senkrechten Stücks 66 identisch ist. Damit das senkrechte Stück 66 gegenüber dem rahmenfesten Zahnkranz 126 drehbar ist, ist an dessen Ende 124 ein koaxialer Bolzen 130 angeformt, welcher den Zahnkranz 126 sowie eine den Zahnkranz 126 tragende Querstrebe 132 des Rahmens in einer Bohrung 134 durchdringt, die als drehbare Lagerung des Bolzens 130 und somit auch als Drehlager der Holmlagerung 115 dient.

In dem Fall, in dem das Zahnritzel 114 mit dem als Zahnrad ausgebildeten Übertragungselement 112 in Eingriff ist, steht die Hülse 116 mit ihrer unteren Stirnseite 136 im Abstand oberhalb des unteren Endes 124 des senkrechten Stücks 66. Um die Hülse 116 in dieser Stellung halten zu können, ist diese mit einem auf der dem Rahmen 16 abgewandten Seite des Zahnritzels 114 im Abstand angeordneten und radial überstehenden Bund 138 versehen, so daß sich zwischen diesem und dem Zahnritzel 114 eine Nut 139 bildet, in welche eine Schaltgabel 140 eingreift. An dieser Schaltgabel 140 greift ein Zugseil 141 eines holmfest angeordneten Seilzugs 142 an, welcher über die Schaltgabel 140 die Hülse 116 relativ zum Holm 64, d.h. relativ zum senkrechten Stück 66 und damit auch relativ zum Rahmen 16, in verschiedenen Abständen von dessen Ende 124 hält.

Durch eine Drehbewegung des Holms 64 um die Achse 122 verdreht sich somit die Hülse 116 und das mit dieser drehfest verbundene Ritzel 114, so daß auch das als Zahnrad ausgebildete Übertragungselement 112 und schließlich das Betätigungselement 110 des Steuerventils 108 gedreht wird, welches in später noch im einzelnen zu beschreibender Weise die Fahrmotoren 76 der Räder 78 steuert.

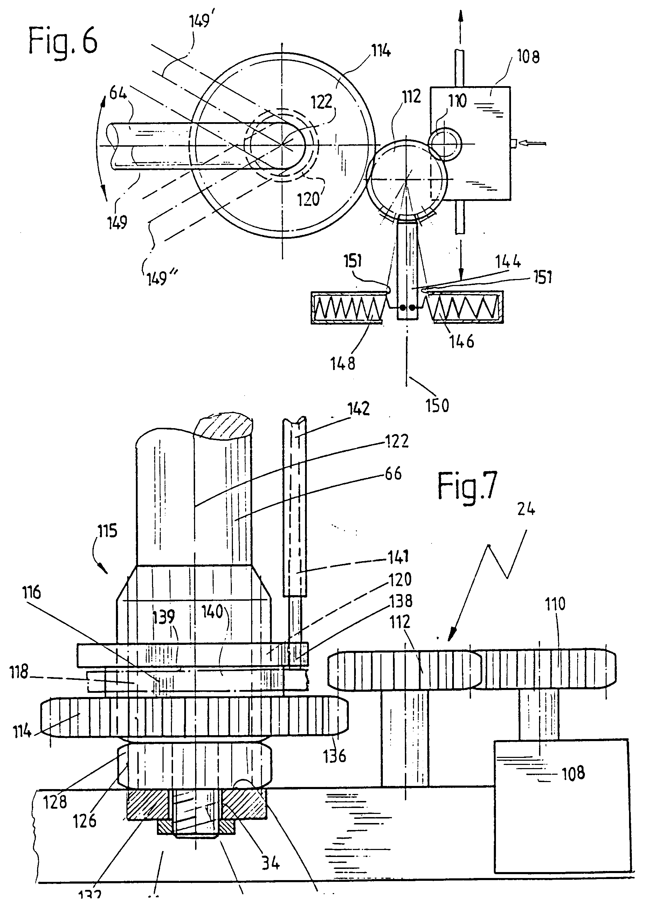

Um zu erreichen, daß nach einer Verdrehung des Holms 64 und somit auch einer dieser Verdrehung entsprechenden Ansteuerung der Fahrmotoren 76 wieder eine Geradeausfahrtstellung, bezeichnet mit 149, sowohl des Holms 64 als auch insbesondere des Betätigungselements 110 selbsttätig erreichbar ist, ist das Übertragungselement 112, wie in Fig. 6 dargesellt, mit einem sich in radialer Richtung erstreckenden Hebel 144 versehen, welcher vorzugsweise durch zwei an diesem angreifende und in entgegengesetzte Richtungen federelastische Elemente 146 und 148 in einer mit 150 bezeichneten Geradeausfahrtstellung gehalten ist, wobei die federelastischen Elemente 146, 148 mit ihren dem Hebel 144 gegenüberliegenden Enden rahmenfest gehalten sind. Außerdem sind zur Begrenzung der Auslenkung des Hebels 144 noch rahmenfest angeordnete Anschläge 151 vorgesehen.

Erfolgt nun ein Verdrehen des Zahnritzels 114, infolgedessen des Übertragungselements 112 und des Betätigungselements 110, so werden die beiden federelastischen Elemente 146 und 148 aus der ihrem Kraftgleichgewicht entsprechenden Geradeausfahrtstellung 150 herausbewegt und üben über den Hebel 144 und das drehbar im Rahmen 116 gelagerte Übertragungselement 112 sowohl auf das Zahnritzel 114 als auch auf das Betätigungselement 110 ein der Auslenkung entgegenwirkendes Drehmoment aus, welches nach dem Loslassen des Holms 64 diesen und damit auch das Betätigungselement 110 in die Geradeausfahrtstellung zurückbewegt.

Bei der vorstehend beschriebenen und als Lenkstellung zu bezeichnenden Position der Hülse 116 wird im allgemeinen davon ausgegangen, daß in der Geradeausfahrtstellung 150 der Holm 64 mit seinen beiden Handgriffen 70 symmetrisch zur Längsmittellinie des Rahmens 16 steht. Bei besonderen mit dem Einachsgerät 10 durchzuführenden Arbeiten kann es jedoch erwünscht sein, den Holm 64 in Geradeausfahrtstellung gegenüber der Längsmittellinie des Rahmens 16 in einem Winkel anzuordnen, so daß eine das Einachsgerät 10 führende Bedienungsperson seitlich versetzt zum Einachsgerät neben diesem her gehen kann. Aus diesem Grund ist die Hülse 116 mittels des Seilzuges 142 aus der Lenkstellung (Fig. 5), in welcher das Zahnritzel 114 mit dem Übertragungselement 112 in Eingriff ist, in eine freidrehende Stellung (Fig. 7) verschiebbar, in welcher das Zahnritzel 114 mit seiner dem Rahmen 16 zugewandten Seite ungefähr bündig mit dem Ende 124 des senkrechten Stücks 66 abschließt und somit in Richtung des Rahmens verschoben steht, so daß ein Eingriff des Zahnritzels 114 in das Übertragungselement 112 nicht mehr gegeben ist. In dieser Stellung ist der Holm 64 um die Achse 122 frei nach allen Richtungen drehbar.

Damit kann in der freidrehenden Stellung, in welcher das Übertragungselement 112, beaufschlagt durch die federelastischen Elemente 146 und 148, in seiner Geradeausfahrtstellung 150 verbleibt, der Holm 64 gegenüber der Längsmittelachse des Rahmens 16 in der gewünschten Richtung verdreht werden und durch anschließendes Verschieben der Hülse 116 in die Lenkstellung die verdrehte Stellung des Holms 64 als Gerdadeausausfahrtstellung (149′, 149˝) fixiert werden, so daß , ausgehend von dieser verdrehten Stellung des Holms,wieder die vorstehend beschriebenen Bewegungen zur Betätigung des Steuerventils 108 und somit zur Lenkung des Einachsgeräts 10 möglich sind.

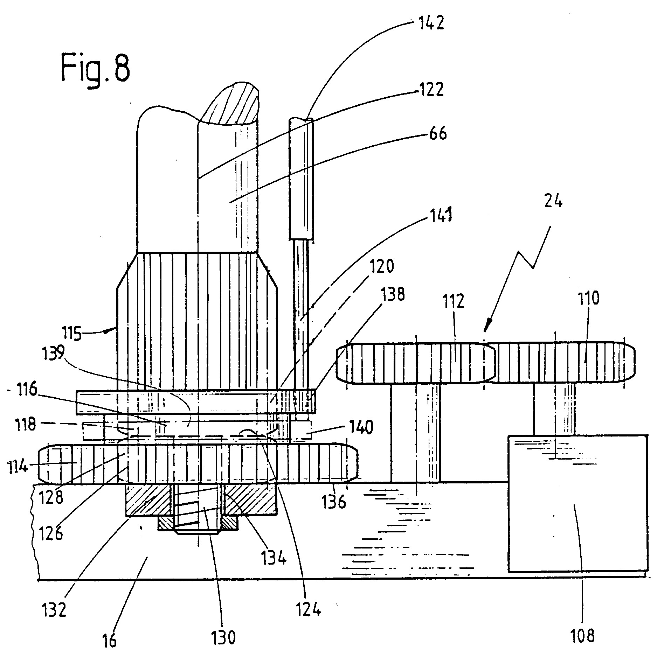

Des weiteren ist es bei manchen Arbeitsvorgängen erwünscht, daß das Einachsgerät 10 überhaupt nicht durch das Steuerventil 108 gelenkt wird, sondern daß das Steuerventil 108 in seiner Geradeausfahrtstellung verbleibt und gegebenenfalls notwendige Lenkbewegungen durch Ausüben eines Drehmoments auf den Rahmen 16 erfolgen. Hierzu kann die Hülse 116 wie in Figur 8 dargestellt, in eine drehfeste Stellung bezüglich des Rahmens 16 mit Hilfe des Seilzugs 42 verschoben werden. Diese drehfeste Stellung ist dadurch erreichbar, daß die Hülse 116 von der freidrehenden Stellung weiter in Richtung des Rahmens 16 so lange verschoben wird, bis die Hülse 116 sowohl noch mit der Außenverzahnung 120 des senkrechten Stücks 66 in Eingriff ist, als auch bereits in die Außenverzahnung 128 des Zahnkranzes 126 eingreift, der seinerseits drehfest am Rahmen 16 gehalten ist. Damit ist insgesamt der Holm 64 drehfest am Rahmen 16 festgelegt, während das Übertragungselement 112 durch die beiden federelastischen Elemente 146 und 148 in seiner Geradeausfahrtstellung, gekennzeichnet mit dem Bezugszeichen 150, gehalten wird und somit das Steuerventil 108 in Geradeausfahrtstellung bleibt.

Die Verstellung des Seilzugs 142 kann über beliebige Betätigungselemente erfolgen. Vorteilhafterweise ist der Seilzug 142 über ein einem der Handgriffe 70 zugeordneten Stellrad 152 verstellbar.

Die Steuerung der beiden Fahrmotoren 76 über das Steuerventil 108 kann in erfindungsgemäßer Weise auf zwei unterschiedliche Arten erfolgen.

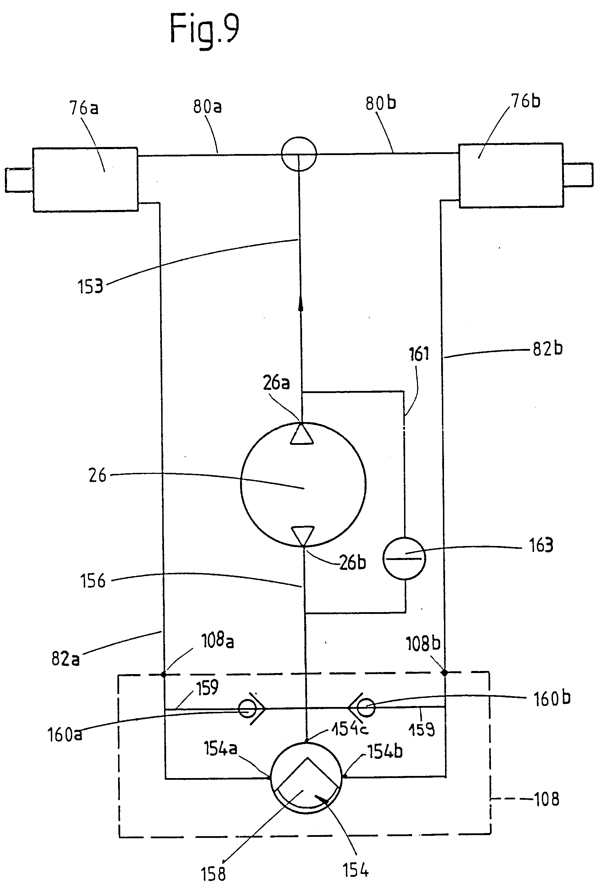

Die erste Möglichkeit, dargestellt in Fig. 9, sieht vor, daß bei Vorwärtsfahrt vom druckseitigen Anschluß 26a des Hydrostaten 26 über eine Druckleitung 153 Hydrauliköl vom Hydrostaten 26 direkt den beiden Zuleitungen 80a, b der Fahrmotoren 76a, b zugeführt wird. In den bei Vorwärtsfahrt das Hydrauliköl ableitenden Leitungen 82a, b fließt dann das Hydrauliköl von jedem der Fahrmotoren 76a, b zum Steuerventil 108, dessen Steueranschlüsse 108a, b mit der jeweiligen Leitung 82a, b verbunden sind und das ein Dreiwegeventil 154 aufweist.

Über jeweils mit einem der Steueranschlüsse 108a, b verbundenen Steuerausgang 154a, b des Steuerventils 154 ist der Abfluß des von den Fahrmotoren 76 kommenden Hydrauliköls über einen Mittelanschluß 154c des Dreiwegeventils 154 in eine zum rücklaufseittigen Anschluß 26 b des Hydrostats 26 führende Rückleitung 156 steuerbar.

Im Falle der Geradeausfahrtstellung des Dreiwegeventils 154 fließt das über die beiden Ableitungen 82a, b in das Dreiwegeventil 154 einströmende Hydrauliköl von beiden Fahrmotoren ungehindert ab, während dann, wenn eine Lenkbewegung des Einachsgeräts 10 erfolgen soll, ein Ventilkörper 158 den Abfluß des Hydrauliköls zur Rückleitung 156 aus einer der beiden Ableitungen 82a, b drosselt und damit bewirkt, daß der dieser Ableitung 82a, b zugeordnete Fahrmotor 76a, b langsamer als der andere dreht und das diesem zugeordnete Rad 78 das kurveninnere Rad wird. Im Extremfall kann durch den Ventilkörper 158 der Rückfluß des Hydrauliköls aus dieser Ableitung 82a, b vollständig unterbunden werden, so daß der dieser zugeordnete Fahrmotor 76 und auch das entsprechende Rad 78 stehenbleiben und das Einachsgerät 10 um dieses Rad schwenkt.

Um beim Rückwärtsfahren des Einachsgeräts - bei welchem nun der Anschluß 26b der druckseitige und der Anschluß 26a der rücklaufseitige ist - ausschließlich Geradeausfahrt zuzulassen, da die in Vorwärtsfahrt wirksame Steuerung bei Rückwärtsfahrt gegensinnig wirken würde und für die Bedienungsperson gefährlich wäre, ist zusätzlich zwischen jedem Steueranschluß 108a, b und der Rückleitung 156 jeweils eine das Dreiwegeventil 154 umgehende Parallelleitung 159 mit jeweils einem Rückschlagventil 160a, b vorgesehen, wobei die Rückschlagventile 160 bei Vorwärtsfahrt, also bei als Ableitungen dienenden Leitungen 82a, b, geschlossen sind, sich jedoch bei Rückwärtsfahrt, d.h. nun als Druckleitung dienender Leitung 156,öffnen und das Dreiwegeventil 154 unwirksam werden lassen, da das Hydrauliköl unmittelbar über die Rückschlagventile 160 in die nunmehr ebenfalls als Zuleitungen dienenden Leitungen 82a, b einströmen kann.

Da die über dem Hydrostat 26 angetriebenen Fahrmotoren 76a, b bei stillstehendem Hydrostat blockieren, ist, um das Einachsgerät ohne Motorantrieb schieben zu können, eine Bypaßleitung 161 mit einem Bypaßventil 163 vorgesehen, mit welcher die Anschlüsse 26a, b des Hydrostaten verbindbar sind.

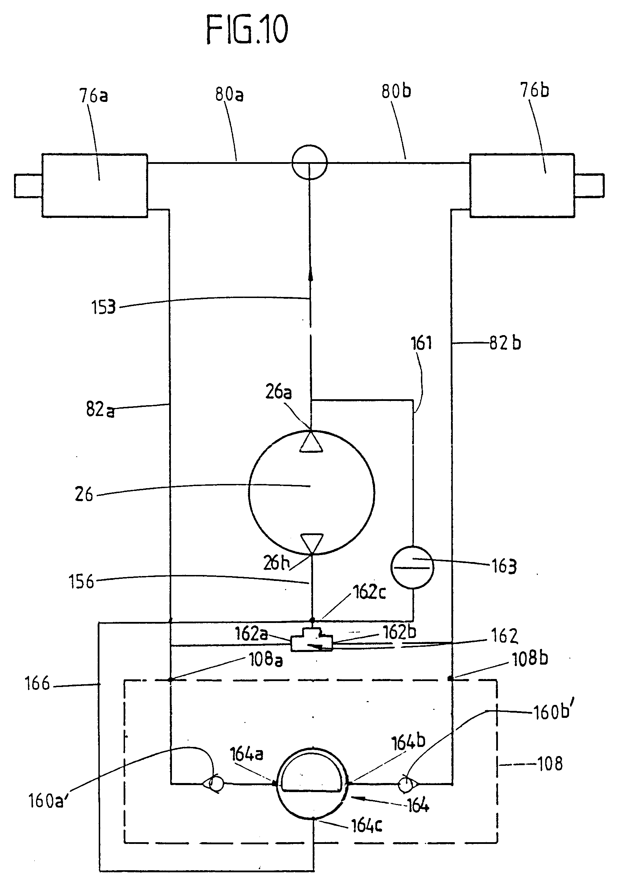

Eine zweite Möglichkeit der Lenkung des erfindungsgemässen Einachsgeräts über die Fahrmotoren 76 ist in Fig. 10 dargestellt. Bei diesem Ausführungsbeispiel wird bei Vorwärtsfahrt ebenfalls die vom Hydrostaten 26 wegführende Leitung 153 als Druckleitung benutzt, welche das Hydrauliköl den beiden als Zuleitungen dienenden Leitungen 80 der beiden Fahrmotoren 76 zuführt. Der Rückstrom des Hydrauliköls von den beiden Fahrmotoren 76a, b über die bei Vorwärtsfahrt als Ableitungen dienenden Leitungen 82a, b läuft bei diesem Ausführungsbeispiel über einen mit seinen beiden Verteileranschlüssen 162a, b mit jeweils einer der Ableitungen 82a, b verbundenen Gleichverteiler 162, welcher dem Hydrauliköl aus jeder der Ableitungen 82a, b beim Einströmen über dessen Mittelzuleitung 162c in die Rückleitung 156 denselben Strömungswiderstand entgegensetzt. Desgleichen ist das Steuerventil 108 mit jeweils einem Steueranschluß 108a, b mit den beiden Ableitungen 82a, b verbunden, die ihrerseits ebenfalls in ein Dreiwegeventil 164 münden, dessen Mittelanschluß 164c über eine Leitung 166 mit der Rückleitung 156 zum Hydrostat 26 in Verbindung steht. Dieses Dreiwegeventil 164 arbeitet nun so, daß es bei Geradeausfahrt beide Ableitungen 82a, b blockiert, so daß das gesamte abfließende Hydrauliköl über den Gleichverteiler 162 in die Rückleitung 156 fließen muß. Soll nun eine Lenkbewegung erfolgen, so gibt das Dreiwegeventil 164 eine der Ableitungen 82a oder 82b frei, so daß das aus dieser kommende Hydrauliköl zusätzlich über die Leitung 166 in die Rückleitung 156 einströmen kann, was zur Folge hat, daß der dieser Ableitung 82a oder 82b zugeordnete Fahrmotor 76a oder 76b seine Umdrehungsgeschwindigkeit erhöht, da insgesamt der Strömungswiderstand beim Abfluß des Hydrauliköls geringer ist. Das diesem Fahrmotor 76a oder 76b zugeordnete Rad 78 ist dann das kurvenäußere Rad.

Um bei dieser Art der Steuerung, bei Rückwärtsfahrt das Dreiwegeventil 164 wirkungslos zu machen, ist zwischen den Steueranschlüssen 108a, b und dem jeweiligen Steuerausgang 164a, b des Dreiwegeventils 164 ein Rückschlagventil 160a′, b′ vorgesehen, welches bei Rückwärtsfahrt die Verbindung des Dreiwegeventils 164 mit den Steueranschlüssen 108a, b blockiert und dadurch dieses wirkungslos macht.

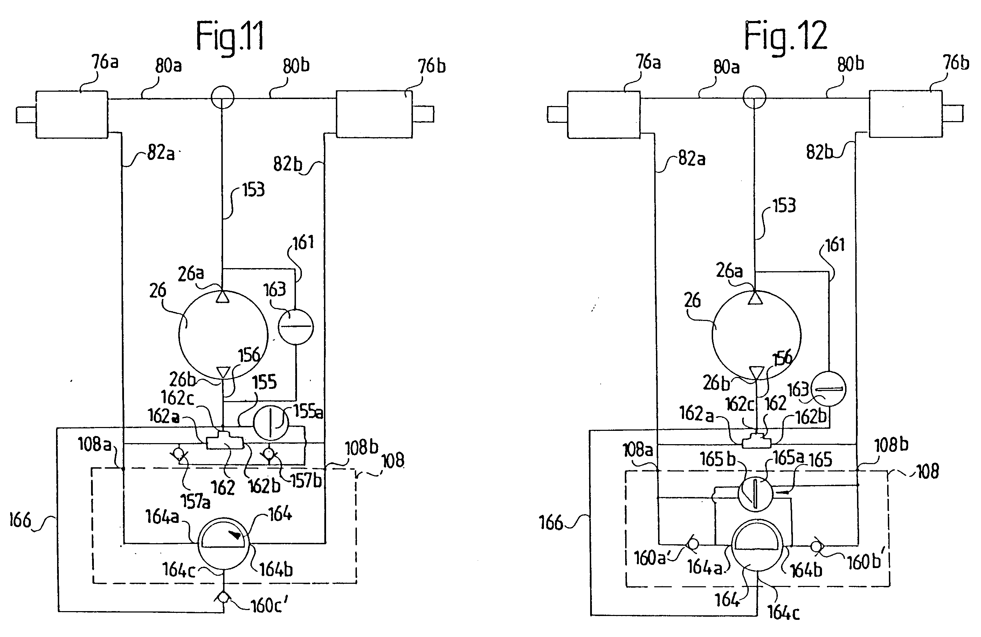

Eine dritte Möglichkeit der Lenkung des erfindungsgemäßen Einachsgeräts 10 über die Fahrmotoren 76 ist in Fig. 11 dargestellt. Diese entspricht weitgehend derjenigen gemäß Fig. 10, so daß bei identischen Teilen auch identische Bezugszeichen verwendet wurden. Bezüglich der Beschreibung wird auf die Beschreibung der zweiten Möglichkeit verwiesen.

Der einzige Unterschied zur zweiten Möglichkeit besteht darin, daß von der Rückleitung 156 eine Leitung 155 mit einem im Normalbetrieb offenen Absperrschieber 155a abzweigt und über Rückschlagventile 157a, b mit den Verteileranschlüssen 162a bzw. 162b verbunden ist, so daß bei Rückwärtsfahrt die Rückschlagventile 157a, b öffnen und eine direkte Verbindung zwischen der bei Rückwärtsfahrt als Druckleitung dienenden Leitung 156 und den Leitungen 82a und 82b erfolgen kann und folglich der Gleichverteiler 162, welcher einen Druckausgleich zwischen den Leitungen 82a, 82b verhindert, wirkungslos ist. Ist der Absperrschieber 155a beim Rückwärtsfahren offen, so ist es möglich, das erfindungsgemäße Einachsgerät von Hand durch Ausüben eines Drehmoments auf den Holm 68 in die jeweils gewünschte Richtung zu drehen. Der Absperrschieber 155a kann aber auch bei Rückwärtsfahrt geschlossen werden, so daß der Gleichverteiler 162 wirksam ist und das Einachsgerät mit einem Fahrverhalten ähnlich einer eingelegten Differentialsperre rückwärts fährt.

Der Einfachheit halber ist ferner im Gegensatz zur zweiten Möglichkeit anstelle der Rückschlagventile 160a′ und 160b′ ein Rückschlagventil 160c′ in der Leitung 166 vor dem Mittelanschluß 164c des Dreiwegeventils 164 vorgesehen, wobei dieses Rückschlagventil 160c′ dann schließt, wenn die Leitung 156 und somit auch die Leitung 166 bei Rückwärtsfahrt Druckleitungen sind, so daß bei Rückwärtsfahrt das Dreiwegeventil 164 wirkungslos ist.

Eine vierte Möglichkeit zur Lenkung des erfindungsgemäßen Einachsgeräts über die Fahrmotoren 76 ist in Fig. 12 dargestellt. Dieses stellt ebenfalls eine Abwandlung der zweiten Möglichkeit in Fig. 10 dar, so daß dieselben Teile mit denselben Bezugszeichen versehen sind und bezüglich der Beschreibung auf die Beschreibung zur zweiten Möglichkeit verwiesen wird.

Im Gegensatz zur zweiten Möglichkeit ist im Steuerventil 108 ein Doppelventil 165 vorgesehen, mit dessen erstem Ventil 165a eine Verbindung zwischen dem Steueranschluß 108b und dem Steuerausgang 164a des Dreiwegeventils 164 herstellbar ist und mit dessen zweitem Ventil 165b eine Verbindung zwischen dem Steueranschluß 108 a und dem Steuerausgang 164b des Dreiwegeventils 164 herstellbar ist. Dabei sind sowohl das erste Ventil 165a als auch das zweite Ventil 165b des Doppelventils 165 gleichzeitig betätigbar, so daß entweder beide Ventile 165a und 165b geöffnet oder beide Ventile 165a und 165b geschlossen sind.

Bei Vorwärtsfahrt sind die beiden Ventile 165a und 165b geschlossen, während bei Rückwärtsfahrt beide Ventile 165a und 165b geöffnet sind und somit die besagten Verbindungen herstellen. Außerdem sind bei Rückwärtsfahrt auch noch die Rückschlagventile 160a′ und 160b wirksam, die die Verbindungen zwischen dem Steueranschluß 108a und dem Steuerausgang 164a sowie zwischen dem Steueranschluß 108b und dem Steuerausgang 164b blockieren, so daß bei Rückwärtsfahrt nur eine Verbindung zwischen dem Steueranschluß 108b über das erste Ventil 165a mit dem Steuerausgang 164a sowie eine Verbindung zwischen dem Steueranschluß 108a über das zweite Ventil 165b mit dem Steuerausgang 164b besteht und somit das Dreiwegeventil 164 in seiner Wirkung auf die Ansteuerung der Fahrmotoren 76a und 76b gerade umgekehrt ist als bei Vorwärtsfahrt, so daß auch bei Rückwärtsfahrt eine der Lenkbewegung am Holm entsprechende Lenkbewegung des Einachsgeräts 10, gesteuert über unterschiedliche Drehzahlen der Fahrmotoren 76a und 76b erfolgt.

Vorzugsweise ist das Doppelventil 165 so angeordnet, daß es bei Verschwenken eines Steuerhebels des Hydrostaten 26 in Rückwärtsfahrtstellung automatisch betätigt wird und damit zwangsläufig die Wirkung des Dreiwegeventils 164a auf die Lenkbewegung für die Rückwärtsfahrt umkehrt.

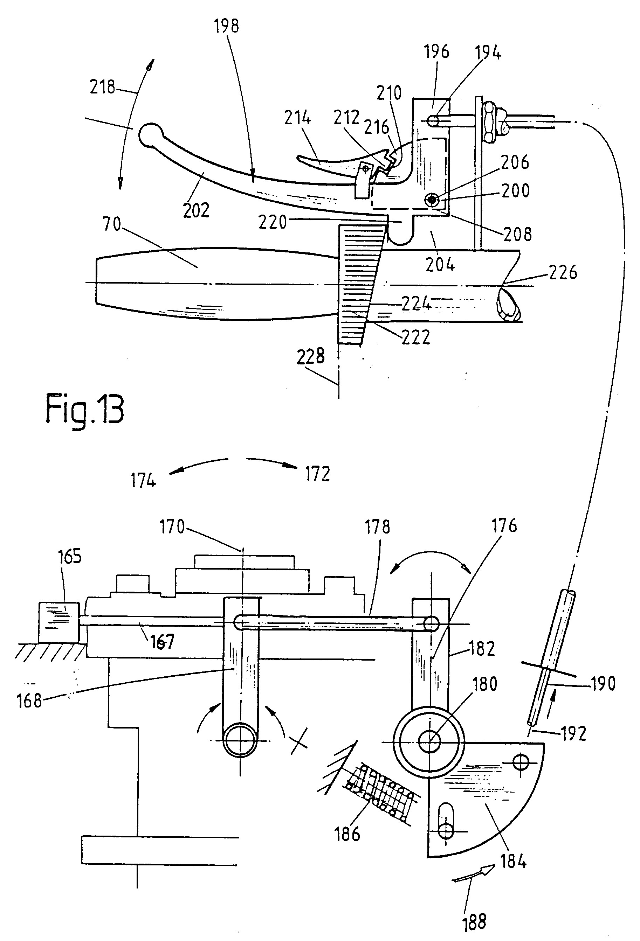

Die den beiderseits des Hydrostaten 26 mit diesem verbundenen Leitungen 153 und 156 zugeführte oder aus diesen entnommene Ölmenge wird durch die Stellung eines Steuerhebels 168 des Hydrostaten 26 bestimmt, der seinerseits wiederum die Stellung einer die einzelnen Kolben des Hydrostaten steξernden Steuerscheibe festlegt. Steht der Steuerhebel 168 in seiner Nullstellung, in Fig.13 durch das Bezugszeichen 170 angedeutet, so wird von dem Hydrostaten 26 weder in die Leitung 152 noch in die Leitung 156 Öl befördert. Wird dagegen der Steuerhebel 168 in Richtung des Pfeils 172 verschwenkt, so wird der Leitrung 153 Hydrauliköl zugeführt, so daß diese als Druckleitung dient, und damit, wie bereits beschrieben, das Einachsgerät vorwärts fährt. Wird dagegen der Steuerhebel 168 in Richtung des Pfeils 174 verschwenkt, so wird der Leitung 156 Hydrauliköl zugeführt und das Einachsgerät 10 fährt rückwärts.

Das bei der vierten Möglichkeit einer Lenkung des Einachsgeräts 10 vorgesehene Doppelventil 165 weist, wie in Fig. 13 dargestellt, eine Betätigungsstange 167 auf, welche durch den Steuerhebel 168 dann beaufschlagbar ist, wenn dieser ausgehend von der Nullstellung 170 in Richtung des Pfeils 174, das heißt in Rückwärtsfahrtstellung, verschwenkt wird. In diesem Fall öffnet sowohl das erste Ventil 165a als auch das zweite Venteil 165b.

Die Betätigung des Steuerhebels 168 in erfindungsgemäßer Weise erfolgt über einen parallel zum Steuerhebel 168 angeordneten und rahmenfest gelagerten Zwischenhebel 176, welcher mit dem Steuerhebel 168 über ein Gestänge 178 verbunden ist, das im einfachsten Fall eine sowohl in eine Bohrung des Steuerhebels 168 als auch in eine Bohrung eines Arms 182 des Zwischenhebels 176 eingehängt ist. An einem bezüglich einer Drehachse 180 des Zwischenhebels 176 dem Arm 182 gegenüberliegenden Arm 184 greift ein einerseits rahmenfest gehaltenes federelastisches Element 186 an, welches den Arm 184 in Richtung des Pfeils 188 beaufschlagt. Ferner ist an diesem Arm 184 ein Zugseil 192 eines Zugs 190 eingehängt, welches mit seinem anderen Ende 194 mit einem Hebelarm 196 eines als Ganzes mit 198 bezeichneten Handhebels verbunden ist, welcher um eine Achse 200 drehbar gelagert ist, wobei sich ein Griffhebel 202 desselben ungefähr parallel zu einem der Handgriffe 70 des Holms erstreckt. Der Holm 64 ist vorzugsweise in seinem vor dem Handgriff 70 liegenden Stück mit einer abstehenden Platte 204 versehen, welche einen konzentrisch zur Achse 200 ausgerichteten und von der Platte 204 abstehenden Stehbolzen 206 trägt, der eine Bohrung 208 des Handgriffhebels 198 durchsetzt und damit diesen drehbar lagert.

Um den Handgriffhebel 198 in der Nullstellung zu fixieren, ist an der Platte 204 eine Ausnehmung 210 vorgesehen, in welche eine Rastnase 212 eines Rasthebels 214 eingreift, der seinerseits gelenkig an dem Handgriffhebel 198 gehalten ist. Beiderseits der Ausnehmung 210 bildet die Platte 204 eine gekrümmte Bahn 216, auf welcher die Rastnase 212 dann entlang gleitet, wenn der Handgriffhebel aus der Nullstellung heraus bewegt ist. Wird nun durch Betätigen des Rasthebels 214 die Rastnase aus der Ausnehmung 210 herausbewegt, so bewegt sich der Handgriffhebel 198 in Richtung des Pfeils 218, da das seinerseits in Richtung des Pfeils 188 durch das federelastische Element 186 vorgespannte Zugseil 192 an dem Hebelarm 196 angreift und damit den Griffhebel 202 vom Handgriff 70 weg verschwenkt. Dies hat zur Folge, daß ohne Betätigung des Griffhebels 202 durch die Bedienungsperson der Zwischenhebel 176 und dadurch auch der Stellhebel 168 in ihre Vorwärtsfahrtstellung verschwenken, wobei mit zunehmendem Schwenkwinkel die von dem Hydrostat 26 geförderte Hydraulikölmenge und damit auch die Fahrtgeschwindigkeit des Einachsgeräts zu nehmen.

Um die maximale Fahrtgeschwindigkeit festlegen zu können, ist am Handgriffhebel 198 auf einer bezüglich der Achse 200 dem Hebelarm 196 entgegengesetzten Seite ein Nocken 220 vorgesehen, welcher beim Verschwenken des Griffhebels 202 in Richtung des Pfeils 218 gegen eine Stirnfläche 224 eines koaxial zum Handgriff 70 und vor diesem angeordneten Stellrings 222 drückt. Die Stirnfläche 224 verläuft dabei schräg zu einer senkrecht auf einer Drehachse 226 des Stellrings 222 stehenden Ebene 228, so daß in Abhängigkeit von einer Drehung des Stellrings 222 um die Drehachse 226 ein unterschiedlich großer Abstand zwischen dem Nocken 220 bei in Nullstellung stehendem Handgriffhebel 198 und der Stirnfläche 224 einstellbar ist, was wiederum zur Folge hat, daß, ausgehend von der Nullstellung der Handgriffhebel 198, stets in Richtung des Pfeils 218 soweit verschwenkt werden kann, bis der Nocken 220 an der Stirnfläche 224 anliegt und damit durch Verdrehen des Stellrings 222 ein maximaler Verschwenkwinkel des Handgriffhebels 198 einstellbar ist. Damit ist aber gleichzeitig ein maximaler Verschwenkwinkel des mit dem Handgriffhebels 198 gekoppelten Zwischenhebels 176 und damit auch des Steuerhebels 168 durch den Stellring 222 und somit auch die maximal vom Hydrostaten 26 geförderte Ölmenge einstellbar.

Vorzugsweise ist die Stirnfläche 224 des Stellrings 222 so ausgebildet, daß sie in einer Minimalstellung des Stellrings 222 keinen Abstand von dem Nocken 220 bei in Nullstellung stehendem Handgriffhebel 198 hat, so daß auch bei einem Lösen der Verrastung ein Verschwenken des Handgriffhebels 198 in Richtung des Pfeils 218 nicht möglich ist und somit auch der Steuerhebel 168 in seiner Nullstellung 170 bleibt, während die Stirnfläche 224 in einer Maximalstellung des Stellrings 222 den größtmöglichen Abstand von dem Nocken 220 bei in Nullstellung stehendem Angriffhebel 198 hat, so daß nach Lösen der Verrastung dieser in Richtung des Pfeils 218 soweit verschwenken kann, daß der Zwischenhebel 176 und damit auch der Steuerhebel 168 in die Stellung verschwenkt werden können, in welcher der Hydrostat 26 die maximale Ölmenge fördert.

Ausgehend von einem Zustand, in welchem der Steuerhebel 168 in der letztgenannten Stellung steht, also der Hydrostat die maximale Ölmenge fördert, hat ein Stillstand der Räder 78, beispielsweise dadurch bedingt, daß das erfindungsgemäße Einachsgerät 10 gegen eine Wand gefahren ist, zur Auswirkung, daß insgesamt der Druck des Hydrauliköls in der Druckleitung 152 ansteigt, so daß damit auch über die Steuerscheibe des Hydrostaten 26 ein entgegengesetzt zum Pfeil 172 gerichtetes Drehmoment auf den Steuerhebel 168 wirkt. Da diese Maximalstellung des Steuerhebels jedoch ausschließlich durch die Kraft des auf den Zwischenhebel wirkenden federelastischen Elements 186 aufrechterhalten wird, kann dieses federelastische Element so gewählt werden, daß es ab einem bestimmten durch den Druckanstieg im Hydrostaten 26 bedingten Gegendrehmoment in Richtung des Pfeils 172 ein selbsttätiges Zurückschwenken des Steuerhebels 168 in Richtung seiner Nullstellung zuläßt, so daß die Fördermenge des Hydrostaten 26 wiederum herabgesetzt wird und damit eine Überhitzung des Öls und des Hydrostaten vermieden werden kann, da dieser selbsttätig die geförderte Ölmenge herabsetzt. Dies kann auch nicht durch die Bedienungsperson verhindert werden, da diese durch Ziehen des Griffhebels 202 lediglich die Möglichkeit hat, den Zwischenhebel 176 und damit den Steuerhebel 168 in ihre Nullstellung zurückzuschwenken, nicht aber die Möglichkeit, den Zwischenhebel 176 und den Steuerhebel 168 in ihrer Maximalstellung zu halten.

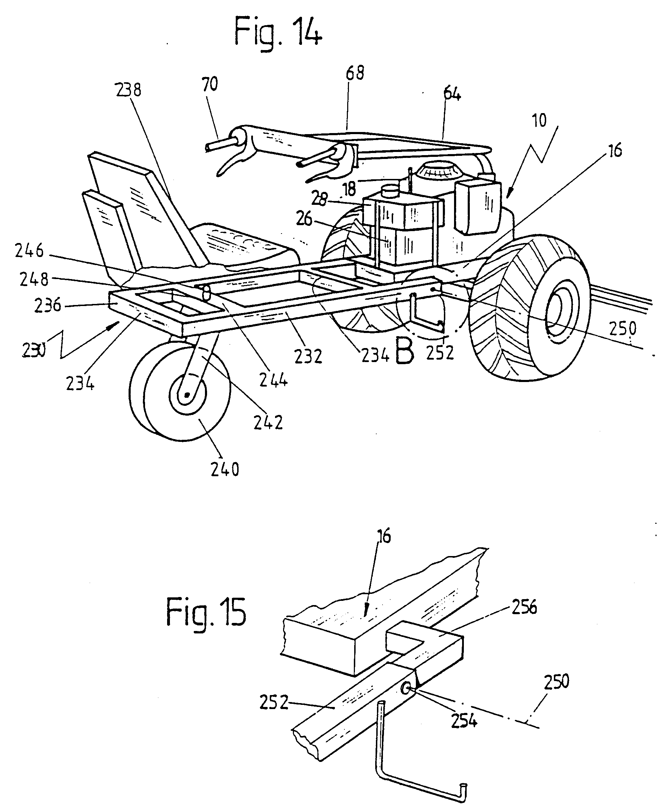

An dem erfindungsgemäßen Einachsgerät 10 ist eine in Fig.14 als Ganzes mit 230 bezeichnete Sitzeinheit montierbar, welche einen aus zwei Längsholmen 232 und zwei Querholmen 234 gebildeten Rahmen 236 umfaßt, auf welchem dem Einachsgerät 10 gegenüberliegend ein Sitz 238 angeordnet ist. Dieser Rahmen 236 stützt sich seinerseits auf der Fahrebene 20 mittels eines Stützrades 240 ab, welches in einer Gabel 242 drehbar gelagert ist. Diese Gabel 242 ist unterhalb des Sitzes 238 an einem sich parallel zu den Querholmen 234 erstreckenden und die beiden Längsholmen 232 verbindenden Querträger 244 dadurch drehbar gelagert, daß ein an der Gabel gehaltener und ungefähr senkrecht zu der von dem Rahmen 236 aufgespannten Ebene stehender Zapfen 246 eine entsprechende Zapfenbohrung 248 in dem Querträger 244 von seiten der Fahrebene durchgreift und über diesen Querträger 244 in Richtung des Sitzes 238 übersteht. Dieser Zapfen 246 bildet somit ein Drehlager mit einer ungefähr senkrecht zur Fahrebene 20 stehenden Drehachse, um welche die Gabel 242 und somit auch das Stützrad 240 voll durchdrehbar ist.

Die Sitzeinheit 230 ist an dem Rahmen 16 des Einachsgeräts 10 um eine parallel zur Achse 74 angeordnete geometrische Achse 250 drehbar gelagert. Hierzu umgreifen die beiden Längsholmen 232 des Rahmens 236 der Sitzeinheit 230 mit ihren vorderen Endbereichen 252 die beiden Längsträger 30 des Rahmens 16 der Zentraleinheit 14 im Bereich ihres hinteren Endes 36 und si:nd jeweils mittels eines koaxial zur Achse 250 angeordneten Bolzens 254 an von den Längsträgern 30 abstehenden Haltewinkeln 256 angelenkt.

Damit kann das Einachsgerät 10 relativ zur Sitzeinheit 230 um die Achse 250, beispielsweise durch Niederdrücken des Holms 64, geschwenkt werden, so daß beispielsweise das in Figur 1 dargestellte Mähwerk 12 von der Fahrebene abgehoben oder auf diese abgesenkt werden kann. Dagegen ist die Sitzeinheit 230 mit dem Einachsgerät 10 in Fahrtrichtung 22 gesehen starr, so daß die Sitzeinheit jeder Schwenkbewegung des Einachsgeräts 10 folgt, was durch das frei um den Zapfen 246 drehbare Stützrad 240 möglich ist.

Die Lenkung des aus dem Einachsgerät 10 und der Sitzeinheit 230 gebildeten Fahrzeugs erfolgt, wie bereits beschrieben, durch Ansteuerung der Fahrmotoren 76 über das Steuerventil 108, betätigt durch den Holm 64.

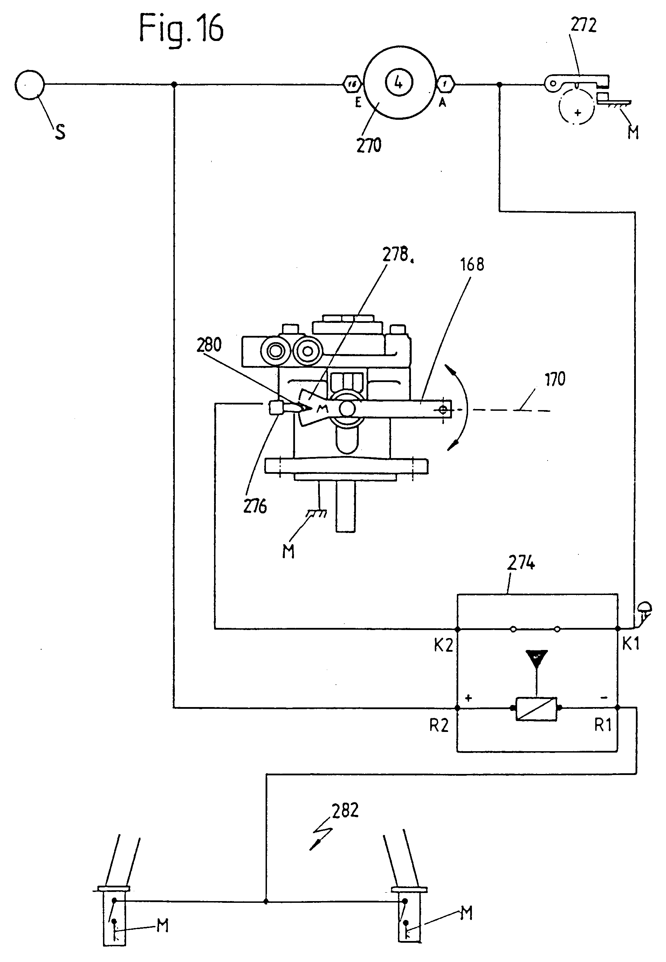

Um zu verhindern, daß das erfindungsgemäße Einachsgerät auch dann weiterfährt, wenn es nicht mehr von einer Bedienungsperson an mindestens einem Handgriff 70 des Holms 64 geführt wird, ist eine in Fig. 16 dargestellte Totmannschaltung für den Verbrennungsmotor 18 vorgesehen.

Hierbei liegt an einem Anschluß S eine Speisespannung an, welche zu einem Eingang E einer Zündspule 270 geführt ist, während deren Ausgang A über einen Unterbrecher 272 mit einem Masseanschluß M verbunden ist. Durch diesen Unterbrecher 272 werden in der Zündspule 270 die einzelnen Zündimpulse erzeugt. Ein Abstellen des Verbrennungsmotors 18 ist nur dadurch möglich, daß der Ausgang A der Zündspule 270 unmittelbar auf Masse M gelegt wird und somit der Unterbrecher 272 wirkungslos wird, so daß auch von der Zündspule 270 keine Zündimpulse mehr erzeugt werden können. Hierzu ist der Anschluß A der Zündspule 270 mit einem Anschluß K 1 eines Schaltkontakts eines Relais 274 verbunden, während ein zweiter Kontakt K 2 dieses Schaltkontakts des Relais mit einem Ausgang K 2 verbunden ist, der seinerseits wieder zu einem Taster 276 am Steuerhebel 168 des Hydrostaten 26 geführt ist. Dieser Taster 276 liegt an einer Kulisse 278 des Steuerhebels 168 an. Diese Kulisse kann beispielsweise so ausgeführt sein, daß die vom Taster 276 in allen ausgelenkten Stellungen beaufschlagten Bereiche auf Masse liegen, während ein vom Taster 276 in der Nullstellung 170 des Steuerhebels 168 beaufschlagter Bereich 280 gegenüber der Masse M isoliert ist. Das heißt, so lange der Steuerhebel 168 in seiner Nullstellung steht, wird durch den Taster 276 kein Massekontakt mit dem Anschluß K 2 hergestellt, während in allen ausgelenkten Stellungen des Steuerhebels 168 der Taster 326 den Anschluß K des Relais 274 auf Masse legt. Zur Ansteuerung des Relais wird ein Anschluß R 1 desselben über eine jeden der Handgriffe 70 abfragende Schalteinrichtung 282 dann auf Masse gelegt, wenn mindestens eine Hand der Bedienungsperson einen der Handgriffe 70 umgreift und folglich die Schalteinrichtung 282 einen Massekontakt herstellt. Ein Anschluß R 2 zur Betätigung des Relais ist mit der Speisepsannung S verbunden.

Der Schaltkontakt zwischen den Anschlüssen K 1 und K 2 ist nun so geschaltet, daß er dann, wenn das Relais 274 angezogen hat, d.h. über die Speisespannung S, den Anschluß R 2, den Anschluß R 1 und über die Schalteinrichtung 282 ein Strom fließt, geöffnet ist, daß heißt die Verbindung zwischen K1 und K2 unterbrochen ist. In diesem Fall kann der Steuerhebel 168 des Hydrostaten 26 in alle Stellungen gebracht werden, ohne daß ein Massekontakt hergestellt wird, da der Schaltkontakt zwischen K 1 und K 2 geöffnet ist. Ist dagegen keine Hand der Bedienungsperson an einem der Handgriffe 70 und somit über die Schalteinrichtung 282 kein Massekontakt hergestellt, so wird das Relais 274 nicht mehr angesteuert und somit der Schaltkontakt zwischen K 1 und K 2 geschlossen. In allen Stellungen, in denen nur der Steuerhebel 168 einen Massekontakt herstellt, das sind alle Stellungen außer der Nullstellung, wird nunmehr der Anschluß A der Zündspule 270 auf Masse gelegt, so daß der Unterbrecher 272 wirkungslos wird und folglich die Zündspule 270 keine Zündimpulse mehr erzeugen kann. Damit kommt der Verbrennungsmotor 18 zum Stillstand.

Steht dagegen der Steuerhebel 168 in Nullstellung 170 so kann der Verbrennungsmotor 18 weiterlaufen, da - obwohl der Schaltkontakt zwischen K1 und K2 geschlossen ist - der Taster 276 keine Verbindung mit der Masse M herstellt.

Ein im Rahmen der vorliegenden Erfindung besonders vorteilhaftes Ausführungsbeispiel der Schalteinrichtung 282 zum Abfragen der Handgriffe 70 sieht vor, daß jeder der Handgriffe 70 eine Griffhülle 290 umfaßt, welche über einen Griffkern 292 gestülpt ist, der seinerseits fest auf jedem Holmende 294 des gabelförmigen Holms 68 sitzt. Dieses Holmende 294 ist vorzugsweise ein Rohr, das von einem zylinderähnlich geformten Griffkern 292 umgeben ist.

Der Griffkern 292 ist mit einer der Griffhülle zugewandten und vorzugsweise sich über einen wesentlichen Bereich in Längsrichtung des Griffkerns 292 erstreckenden eine Verdrängungskammer bildenden Ausnehmung 296 versehen, welche von der Griffhülle 290 druckdicht überdeckt ist. In diese Ausnehmung 196 mündet ein Druckschlauch 298, welcher den Griffkern 292 durchdringt und durch das das Holmende 294 bildende Rohr aus dem Handgriff 70 herausgeführt ist. Dieser Schlauch 298 führt zu einem Drucksensor 300, welcher vorzugsweise auf einen geringen Überdruck, beispielsweise 0,01 bar, anspricht und eine Verbindung zwischen dem Anschluß R1 und der Masse M herstellt.

Sobald nun eine Bedienungsperson den Griff 70 fest umgreift, drückt sie zwangsläufig die elastische Griffhülle 290 in die Ausnehmung 296 und verdrängt somit das in der Ausnehmung 296 gehaltene Medium, was zu einem Druckanstieg führt, der über den Schlauch 298 auch im Drucksensor 200 wirksam ist und damit die Kontaktverbindung zwischen der Masse M und dem Anschluß R1 des Relais 274 herstellt.

Um sicherzustellen, daß stets bei einem Handanlegen an einem derartigen Handgriff 70 die Griffhülle 290 in die Ausnehmung 296 gedrückt wird, ist die Ausnehmung 296 vorzugsweise so angeordnet, daß sie unterhalb eines von der Handinnenfläche umgriffenen Bereichs der Griffhülle 290 liegt.

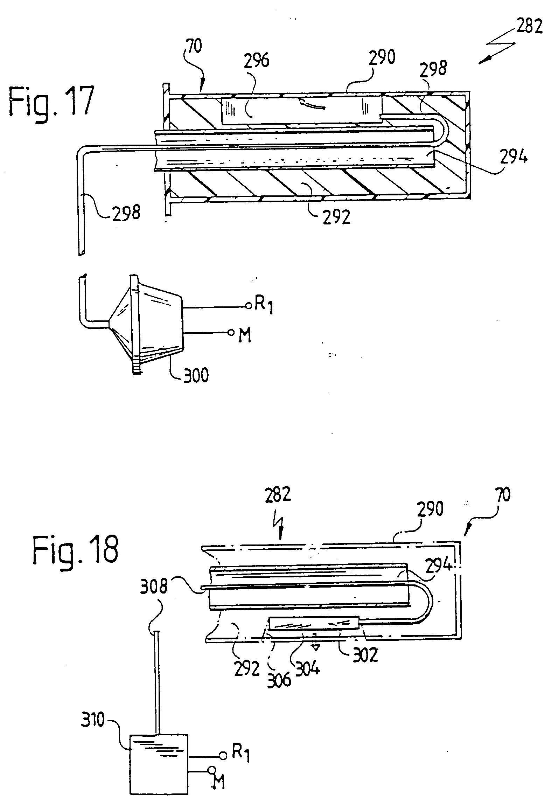

Ein weiteres Ausführungsbeispiel einer erfindungsgemäßen Schalteinrichtung 282 ist i:n Fig. 18 dargestellt. Bei diesem ist in den Griffkern 292 ein Fotosensor 302 eingesetzt, dessen fotoaktive Fläche 304 über eine Öffnung 306 in der Griffhülle 290 beleuchtbar ist. Diese Öffnung 306 ist vorzugsweise so angeordnet, daß sie dann, wenn die Hand den Handgriff 70 umgreift, abgedeckt ist. Eine mit diesem Fotosensor 302 über Zuleitungen 308 verbundene Steuerung 310 stellt dann, wenn die fotoaktive Fläche 304 des Fotosensors 302 nicht beleuchtet ist, einen Kontakt zwischen der Masse M und dem Anschluß R1 des Relais 274 her, während sie dann, wenn die fotoaktive Fläche 304 beleuchtet ist, diesen Kontakt öffnet.

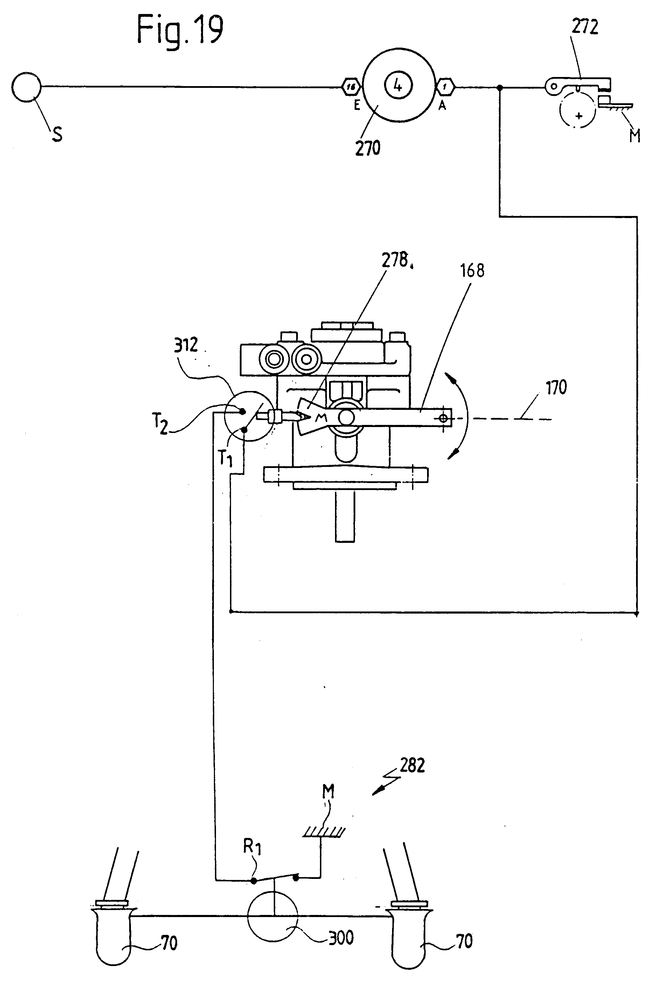

Ein zweites Ausführungsbeispiel einer erfindungsgemäßen Totmannschaltung, dargestellt in Fig. 19, ist insoweit als es mit dem ersten Ausführungsbeispiel, dargestellt in Fig. 16, identisch ist, mit denselben Bezugszeichen versehen, so daß bezüglich deren Beschreibung auf das erste Ausführungsbeispiel verwiesen werden kann.

Im Gegensatz zum ersten Ausführungsbeispiel ist der Ausgang A der Zündspule 270 unmittelbar mit einem anschluß T1 eines Tasters 312 verbunden, welcher die Stellung der Kulisse 288 abfragt und dann, wenn der Steuerhebel 168 in seiner Neutralstellung 170 steht, geöffnet ist, so daß keine Verbindung zwischen dem Anschluß T1 und einem Anschluß T2 dieses Tasters 312 besteht. Steht dagegen der Steuerhebel 168 außerhalb der Neutralstellung 170, so ist der Anschluß T1 des Tasters mit dem Anschluß T2 verbunden. Dieser Anschluß T2 steht seinerseits unmittelbar in Verbindung mit dem Anschluß R1 der Schalteinrichtung 282, welche bei dem in Fig. 19 dargestellten Ausführungsbeispiel vorzugsweise entsprechend Fig.17 ausgebildet ist, so daß ein Drucksensor 300 vorgesehen ist, welcher zwischen R1 und der Masse M dann einen Kontakt herstellt, wenn keiner der Handgriffe 70 durch die Hand einer Bedienungsperson beaufschlagt ist. Sobald jedoch einer der Handgriffe 70 handbeaufschlagt ist, wird durch den Drucksensor 300 der Kontakt zwischen dem Anschluß R1 und der Masse M unterbrochen.

Dieses zweite Ausführungsbeispiel funktioniert nun folgendermaßen:
Immer dann, wenn der Steuerhebel 168 aus der Neutralstellung ausgelenkt ist, ist eine Verbindung zwischen T1 und T2 hergestellt und außerdem ist immer dann, wenn keiner der Handgriffe 70 handbeaufschlagt ist, eine Verbindung zwischen R1 und der Masse M hergestellt, so daß in diesem Zustand der Ausgang A der Zündspule 270 über den Taster 212 und den Drucksensor 300 auf Masse M gelegt und der Verbrennungsmotor abgestellt ist.

Ist jedoch entweder der Steuerhebel 168 in seiner Neutralstellung 170 und/oder einer der Handgriffe 70 handbeaufschlagt, so ist die Verbindung zwischen T1 und T2 unterbrochen und/oder die Verbindung zwischen R1 und M, so daß der Ausgang A der Zündspule 270 lediglich durch den Unterbrecher 272 auf Masse M gelegt werden kann und folglich der Verbrennungsmotor normal läuft.

## Patentansprüche

1. Einachsgerät mit einem Holm, einem Verbrennungsmotor (18) und zwei an einer Radachse (74) montierten angetriebenen Rädern (78), wobei der Verbrennungsmotor (18) einen Hydrostat (26), dieser mindestens einen Fahrmotor (76) und letzterer seinerseits die beiden Räder (78) antreibt sowie einer Montagevorrichtung für Anbaugeräte,
**dadurch gekennzeichnet**, daß das Einachsgerät (10) eine Zentraleinheit (14), gebildet aus dem Verbrennungsmotor (18), dem Hydrostat (26), einem Holm (64) und der Montagevorrichtung für Anbaugeräte (260) sowie eine mit der Zentraleinheit (14) lösbar verbundene Achseinheit (72), gebildet aus dem Fahrmotor (76) und der Radachse (74) umfaßt.

2. Einachsgerät nach Anspruch 1, dadurch gekennzeichnet, daß die Achseinheit (72) und die Zentraleinheit (14) ungefähr quer zur Achs- und parallel zur Fahrtrichtung (22) relativ zueinander in verschiedenen Stellungen positionierbar sind.

3. Einachsgerät nach Anspruch 2, dadurch gekennzeichnet, daß die Achseinheit (72) und die Zentraleinheit (14) relativ zueinander verstellbar sind.

4. Einachsgerät nach Anspruch 2 oder 3, dadurch gekennzeichnet, daß die Achseinheit (72) an der Zentraleinheit (14) verschiebbar gelagert ist.

5. Einachsgerät nach Anspruch 4, dadurch gekennzeichnet daß die Achseinheit (72) mit einer Spindel (94) verschiebbar ist.

6. Einachsgerät nach Anspruch 4, dadurch gekennzeichnet, daß die Achseinheit (72) mittels einer Hydraulikeinrichtung (102) verschiebbar ist.

7. Einachsgerät nach Anspruch 6, dadurch gekennzeichnet, daß mittels der Hydraulikeinrichtung (102) die Achseinheit (72) in Abhängigkeit vom Radgegendrehmoment verschiebbar ist.

8. Einachsgerät nach Anspruch 7, dadurch gekennzeichnet, daß die Hydraulikeinrichtung (102) das Radgegendrehmoment über Druckänderungen in einem Hydrostaten-(26) Fahrmotorkreisumlauf (76) erfaßt, und mit diesem einen Hydraulikzylinder (102) steuert.

9. Einachsgerät nach Anspruch 8, dadurch gekennzeichnet, daß der Hydraulikzylinder (102) einen Verstellkolben (103) umfaßt, welcher in einer Richtung durch ein federelastisches Element (105) und in der entgegengesetzten Richtung durch den Druck ein Hydrostaten-Fahrmotorkreislauf beaufschlagt ist.

10. Einachsgerät nach einem der Ansprüche 1 bis 9, dadurch gekennzeichnet, daß die Zentraleinheit (14) eine vom Verbrennungsmotor (18) mechanisch angetriebene Zapfwelle (42) zum Antrieb der Anbaugeräte (12) aufweist.

11. Einachsgerät nach Anspruch 10, dadurch gekennzeichnet, daß der Verbrennungsmotor (18) eine ungefähr senkrecht zu einer Fahrebene (20) stehende Abtriebswelle (46) aufweist und über ein erstes Übertragungsgetriebe (48, 50, 52) eine parallel zu dieser Abtriebswelle (46) stehende Antriebswelle (54) des Hydrostats (26) und über ein zweites Übertragungsgetriebe (48, 56, 58) eine parallel zur Abtriebswelle (46) ausgerichtete Antriebswelle (60) des Zapfwellengetriebes (40) treibt.

12. Einachsgerät nach Anspruch 11, dadurch gekennzeichnet, daß das erste und das zweite Übertragungsgetriebe (48, 50, 52; 48, 56, 58) Riemengetriebe sind.

13. Einachsgerät nach Anspruch 11 oder 12, dadurch gekennzeichnet, daß die Übertragungsgetriebe (48, 50, 52; 48, 56, 58) im wesentlichen zwischen zwei Längsträgern (30) der Zentraleinheit (14) angeordnet sind.

14. Einachsgerät nach einem der voranstehenden Ansprüche, dadurch gekennzeichnet, daß jedem Rad (78) ein achsfest montierter Fahrmotor (76) zugeordnet ist.

15. Einachsgerät nach Anspruch 14, dadurch gekennzeichnet, daß die Fahrmotoren (76) beider Räder (78) parallelgeschaltet sind.

16. Einachsgerät nach Anspruch 15, dadurch gekennzeichnet, daß eine jeden Fahrmotor (76) durchströmende Ölmenge durch eine Steuereinheit (24) mit einem Steuerventil (108) regelbar ist.

17. Einachsgerät nach Anspruch 16, dadurch gekennzeichnet, daß das Steuerventil (108) ein bei Vorwärtsfahrt die Ölmengen abweichend von einer Gleichverteilung steuerndes Steuerglied (154, 164) umfaßt.

18. Einachsgerät nach Anspruch 17, dadurch gekennzeichnet, daß bei Rückwärtsfahrt das Steuerglied (154, 164) unwirksam ist.

19. Einachsgerät nach Anspruch 18, dadurch gekennzeichnet, daß das Steuerglied (154, 164) umgehende, bei Rückwärtsfahrt zuschaltbare Parallelleitungen (160) vorgesehen sind.

20. Einachsgerät nach Anspruch 19, dadurch gekennzeichnet, daß jede Parallelleitung ein Einwegventil (160) aufweist, welches diese bei Vorwärtsfahrt blockiert und bei Rückwärtsfahrt freigibt.

21. Einachsgerät nach einem der Ansprüche 16 bis 20, dadurch gekennzeichnet, daß ein die Ölmenge auf die beiden Fahrmotoren (76) aufteilender Gleichverteiler (162) vorgesehen ist und daß zur Steuerung der Ölmengen das Steuerventil (108) mit dem Gleichverteiler (162) parallelgeschaltet ist.

22. Einachsgerät nach Anspruch 21, dadurch gekennzeichnet, daß das Steuerglied (164) bei Rückwärtsfahrt durch ein Ventil (160a', b', c') blockierbar ist.

23. Einachsgerät nach Anspruch 22, dadurch gekennzeichnet, daß das Ventil (160a', b', c') ein Rückschlagventil ist.

24. Einachsgerät nach einem der Ansprüche 21 bis 23, dadurch gekennzeichnet, daß eine die Wirkung des Gleichverteilers (162) aufhebende Verbindung (155) zwischen einer Mittelzuleitung (162c) des Gleichverteilers und den von den Fahrmotoren (76a, b) zum Gleichverteiler (162) führenden Leitungen (82a, b) bei Rückwärtsfahrt herstellbar ist.

25. Einachsgerät nach einem der Ansprüche 16 bis 24, dadurch gekennzeichnet, daß Umschaltventile (165) vorgesehen sind, mit welchen die Wirkung des Steuerglieds (164) auf die jeden Fahrmotor (76a, b) durchströmende Ölmenge bei Rückwärtsfahrt umkehrbar ist.

26. Einachsgerät nach Anspruch 25, dadurch gekennzeichnet, daß die bei Vorwärtsfahrt bestehende Verbindung zwischen jedem Ausgang (164a, b) des Steuerglieds (164) mit der jeweiligen Hydraulikleitung (80a, b) bei Rückwärtsfahrt unterbrechbar und eine Verbindung jedes Ausgangs (164a, b) mit der jeweils anderen Hydraulikleitung (80b, a) herstellbar ist.

27. Einachsgerät nach einem der Ansprüche 16 bis 26, dadurch gekennzeichnet, daß die Steuereinheit (24) eine Holmlagerung (115) umfaßt und daß der Holm (64) in einer Lenkstellung der Holmlagerung (115) gegenüber der Steuereinheit (24) drehbar und das Steuerventil (108) durch eine Drehung des Holms (64) betätigbar ist.

28. Einachsgerät nach Anspruch 27, dadurch gekennzeichnet, daß der Holm (64) in der Holmlagerung (115) um eine im wesentlichen senkrecht auf einem Rahmen (16) des Einachsgeräts (10) stehende Achse drehbar ist.

29. Einachsgerät nach Anspruch 27 oder 28, dadurch gekennzeichnet, daß der Holm (64) in Lenkstellung begrenzt drehbar ist.

30. Einachsgerät nach einem der Ansprüche 16 bis 29, dadurch gekennzeichnet, daß das Steuerventil (108) ein Betätigungselement (110) umfaßt, welches über mindestens ein elastisches Element (146, 148) in eine Geradeausfahrtstellung rückstellbar ist.

31. Einachsgerät nach einem der Ansprüche 27 bis 30, dadurch gekennzeichnet, daß der Holm über ein elastisches Element (146, 148) in die Geradeausfahrtstellung rückstellbar ist.

32. Einachsgerät nach einem der Ansprüche 27 bis 31, dadurch gekennzeichnet, daß zwischen dem Holm (64) und dem Betätigungselement (110) des Steuerventils (108) ein Übertragungselement (112) angeordnet ist.

33. Einachsgerät nach Anspruch 32, dadurch gekennzeichnet, daß das Übertragungselement (112) als den Holm (64) und das Betätigungselement (110) mittels federelastischer Elemente (146, 148) in die Geradeausfahrtstellung (149) zurückführend ausgebildet ist.

34. Einachsgerät nach einem der Ansprüche 27 bis 33, dadurch gekennzeichnet, daß der Holm (64) in Lenkstellung der Holmlagerung (115) in seiner Geradeausfahrtstellung (149', 149'') gegenüber der Geradeausfahrtrichtung (149) um einen Winkel verdreht positionierbar ist.

35. Einachsgerät nach einem der Ansprüche 27 bis 34, dadurch gekennzeichnet, daß die Holmlagerung (115) eine den Holm (64) drehfest an der Zentraleinheit (14) festlegende Stellung aufweist.

36. Einachsgerät nach einem der Ansprüche 27 bis 35, dadurch gekennzeichnet, daß die Holmlagerung (115) eine frei drehende Stellung aufweist, in welcher der Holm (64) gegenüber der Steuereinheit (24) und dem Betätigungselement (110) des Steuerventils (108) sowie dem Rahmen (16) frei drehbar ist.

37. Einachsgerät nach einem der Ansprüche 27 bis 36, dadurch gekennzeichnet, daß die Holmlagerung (115) ein an einem an der Zentraleinheit (14) gelagerten Ende (124) des Holms (64) drehfest gehaltenes und längs seiner Drehachse verschiebliches Getriebeelement (114, 116) umfaßt.

38. Einachsgerät nach Anspruch 37, dadurch gekennzeichnet, daß das Getriebeelement (114, 116) durch Verschieben in eine der Lenkstellung der Holmlagerung (115) entsprechende Stellung überführbar ist, in welcher mit diesem Getriebeelement (114, 116) das Betätigungselement (110) des Steuerventils (108) verstellbar ist.

39. Einachsgerät nach einem der Ansprüche 37 oder 38, dadurch gekennzeichnet, daß das Getriebeelement (114, 116) durch Verschieben in die der frei drehenden Stellung der Holmlagerung (115) entsprechende Stellung überführbar ist, in welcher dieses Getriebeelement (114, 116) frei drehbar ist.

40. Einachsgerät nach einem der Ansprüche 37 bis 39, dadurch gekennzeichnet, daß das Getriebeelement (114, 116) durch Verschieben in die der drehfesten Stellung der Holmlagerung (115) entsprechende Stellung überführbar ist, in welcher es mit einem an der Steuereinheit (24) fest angeordneten Gegenstück (126) in Eingriff ist.

41. Einachsgerät nach einem der voranstehenden Ansprüche, dadurch gekennzeichnet, daß eine beide Handgriffe (70) sowie einen Steuerhebel (168) der Antriebseinheit (26) abtastende Totmannschaltung vorgesehen ist, welche den Antriebsmotor (18) abstellt, wenn bei aus der Nullstellung (170) ausgelenktem Steuerhebel (168) der Antriebseinheit (26) nicht mindestens ein Handgriff (70) von einer Hand einer Bedienungsperson umfaßt ist.

42. Einachsgerät nach Anspruch 41, dadurch gekennzeichnet, daß jeder Handgriff (70) eine durch Handanlegen volumenveränderliche Verdrängungskammer (296) aufweist, welche mit einem Drucksensor (300) in Verbindung steht, der seinerseits bei deformierter Verdrängungskammer (296) das dem umfaßten Handgriff (70) meldende Signal auslöst.

43. Einachsgerät nach Anspruch 41, dadurch gekennzeichnet, daß jeder Handgriff (70) in einem beim Handanlegen übergriffenen Bereich einen Fotosensor (302) umfaßt, der bei aufgelegter Hand abgedeckt ist und das den umfaßten Handgriff (70) meldende Signal auslöst.

44. Einachsgerät nach einem der Ansprüche 41 bis 43, dadurch gekennzeichnet, daß der Steuerhebel (168) mit einer mit diesem gemeinsam verschwenkbaren Kontaktfläche (278) versehen ist, an welcher ein Kontaktfinger (276) anliegt, und daß die Kontaktfläche (278) so ausgebildet ist, daß in der Nullstellung (170) des Steuerhebels (168) kein elektrischer Kontakt zwischen dieser und dem Kontaktfinger (276) herstellbar ist, während außerhalb der Nullstellung (170) ein Kontakt besteht.

45. Einachsgerät nach einem der Ansprüche 41 bis 44, dadurch gekennzeichnet, daß der Steuerhebel (168) mit einer einen Taster (276) betätigenden und zu der Nullstellung (170) symmetrischen Kulisse (278) versehen ist.

46. Einachsgerät nach einem der voranstehenden Ansprüche, dadurch gekennzeichnet, daß dieses mit einer radgestützten Sitzeinheit (230) versehen ist.

47. Einachsgerät nach Anspruch 46, dadurch gekennzeichnet, daß die Sitzeinheit (230) eine um eine zur Fahrebene (20) ungefähr senkrechte Achse frei drehbare Radeinheit (240, 242) umfaßt.

48. Einachsgerät nach Anspruch 45, dadurch gekennzeichnet, daß die Sitzeinheit (230) gegenüber dem Einachsgerät (10) um eine zu dessen Achse (74) parallele Achse (252) schwenkbar ist.

## Claims

1. Uni-axle working vehicle comprising a handle bar, an internal combustion engine (18) and two driven wheels (78) mounted on a wheel axle (74), wherein the internal combustion engine (18) drives a hydrostat (26), this at least one drive motor (76) and the latter for its part the two wheels (78), as well as a mounting device for implements, characterized in that the uni-axle vehicle (10) comprises a central unit (14) formed of the internal combustion engine (18), the hydrostat (26), a handle bar (64) and the mounting device for implements (260) as well as an axle unit (72) releasably connected to the central unit (14) and formed of the drive motor (76) and the wheel axle (74).

2. Uni-axle vehicle as defined in claim 1, characterized in that the axle unit (72) and the central unit (14) are positionable relative to one another in different positions approximately transversely to the axial direction and parallel to the direction of travel (22).

3. Uni-axle vehicle as defined in claim 2, characterized in that the axle unit (72) and the central unit (14) are adjustable relative to one another.

4. Uni-axle vehicle as defined in claim 2 or 3, characterized in that the axle unit (72) is displaceably mounted on the central unit (14).

5. Uni-axle vehicle as defined in claim 4, characterized in that the axle unit (72) is displaceable with a spindle (94).

6. Uni-axle vehicle as defined in claim 4, characterized in that the axle unit (72) is displaceable by means of a hydraulic device (102).

7. Uni-axle vehicle as defined in claim 6, characterized in that the axle unit (72) is displaceable by means of the hydraulic device (102) as a function of the wheel countertorque.

8. Uni-axle vehicle as defined in claim 7, characterized in that the hydraulic device (102) determines the wheel countertorque via pressure variations in a hydrostat (26) - drive motor circuit (76), and, with this, controls a hydraulic cylinder (102).

9. Uni-axle vehicle as defined in claim 8, characterized in that the hydraulic cylinder (102) comprises an adjustable piston (103) acted upon in one direction by an elastic, spring element (105) and in the opposite direction by the pressure of a hydrostat-drive motor circuit.

10. Uni-axle vehicle as defined in any of claims 1 to 9, characterized in that the central unit (14) comprises a power takeoff shaft (42) mechanically driven by the internal combustion engine for driving the implements (12).

11. Uni-axle vehicle as defined in claim 10, characterized in that the internal combustion engine (18) comprises an output shaft (46) extending approximately at right angles to a plane of travel (20) and drives a drive shaft (54) of the hydrostat (26) extending parallel to this output shaft (46) via a first transmission gear (48, 50, 52) and a drive shaft (60) of the power takeoff gear (40) aligned parallel with the output shaft (46) via a second transmission gear (48, 56, 58).

12. Uni-axle vehicle as defined in claim 11, characterized in that the first and the second transmission gears (48, 50, 52; 48, 56, 58) are belt drives.

13. Uni-axle vehicle as defined in claim 11 or 12, characterized in that the transmission gears (48, 50, 52; 48, 56, 58) are arranged essentially between two longitudinal supports (30) of the central unit (14).

14. Uni-axle vehicle as defined in any of the preceding claims, characterized in that a drive motor (76) mounted so as to be stationary on the axle is associated with each wheel (78).

15. Uni-axle vehicle as defined in claim 14, characterized in that the drive motors (76) of both wheels (78) are connected in parallel.

16. Uni-axle vehicle as defined in claim 15, characterized in that an amount of oil flowing through each drive motor (76) is regulatable by a control unit (24) comprising a control valve (108).

17. Uni-axle vehicle as defined in claim 16, characterized in that the control valve (108) comprises a control element (154, 164) controlling the amounts of oil during forward movement to vary from an equal distribution.

18. Uni-axle vehicle as defined in claim 17, characterized in that the control element (154, 164) is inactive during reversing movement.

19. Uni-axle vehicle as defined in claim 18, characterized in that parallel lines (160) are provided for bypassing the control element (154, 164), said lines being connectable during reversing movement.

20. Uni-axle vehicle as defined in claim 19, characterized in that each parallel line comprises a one-way valve (160) blocking this line during forward movement and releasing it during reversing movement.

21. Uni-axle vehicle as defined in any of claims 16 to 20, characterized in that an equal distributor (162) is provided for distributing the amount of oil to the two drive motors (76) and that for controlling the amounts of oil the control valve (108) is connected in parallel to the equal distributor (162).

22. Uni-axle vehicle as defined in claim 21, characterized in that the control element (164) is blockable by a valve (160a', b', c') during reversing movement.

23. Uni-axle vehicle as defined in claim 22, characterized in that the valve (160a', b', c') is a check valve.

24. Uni-axle vehicle as defined in any of claims 21 to 23, characterized in that a connection (155) cancelling the effect of the equal distributor (162) is establishable during reversing movement between a central supply line (162c) of the equal distributor and the lines (82a, b) leading from the drive motors (76a, b) to the equal distributor (162).

25. Uni-axle vehicle as defined in any of claims 16 to 24, characterized in that change-over valves (165) are provided for reversing the effect of the control element (164) on the amount of oil flowing through each drive motor (76a, b) during reversing movement.

26. Uni-axle vehicle as defined in claim 25, characterized in that the connection existing during forward movement between each output (164a, b) of the control element (164) and the respective hydraulic line (80a, b) is interruptable during reversing movement and a connection of each output (164a, b) with the respective other hydraulic line (80b, a) is establishable.

27. Uni-axle vehicle as defined in any of claims 16 to 26, characterized in that the the control unit (24) comprises a bar mounting (115) and that the bar (64) is rotatable relative to the control unit (24) in a steering position of the bar mounting (115) and the control valve (108) is actuatable by rotation of the bar (64).

28. Uni-axle vehicle as defined in claim 27, characterized in that the bar (64) is rotatable in the bar mounting (115) about a axis extending essentially at right angles to a frame (16) of the uni-axle vehicle (10).

29. Uni-axle vehicle as defined in claim 27 or 28, characterized in that the bar (64) is rotatable to a limited extent in a steering position.

30. Uni-axle vehicle as defined in any of claims 16 to 29, characterized in that the control valve (108) comprises an actuating element (110) returnable into a straight-ahead position via at least one elastic element (146, 148).

31. Uni-axle vehicle as defined in any of claims 27 to 30, characterized in that the bar is restorable into the straight-ahead position via an elastic element (146, 148).

32. Uni-axle vehicle as defined in any of claims 27 to 31, characterized in that a transmission element (112) is arranged between the bar (64) and the actuating element (110) of the control valve (108).

33. Uni-axle vehicle as defined in claim 32, characterized in that the transmission element (112) is designed to return the bar (64) and the actuating element (110) into the straight-ahead position (149) by means of elastic spring elements (146, 148).

34. Uni-axle vehicle as defined in any of claims 27 to 33, characterized in that the bar (64) in steering position of the bar mounting (115) is positionable in its straight-ahead position (149', 149'') so as to be turned through an angle relative to the straight-ahead direction (149).

35. Uni-axle vehicle as defined in any of claims 27 to 34, characterized in that the bar mounting (115) has a position fixing the bar (64) non-rotatably on the central unit (14).

36. Uni-axle vehicle as defined in any of claims 27 to 35, characterized in that the bar mounting (115) has a freely rotating position, in which the bar (64) is freely rotatable relative to the control unit (24) and the actuating element (110) of the control valve (108) as well as the frame (16).

37. Uni-axle vehicle as defined in any of claims 27 to 36, characterized in that the bar mounting (115) comprises a gear element (114, 116) non-rotatably held on one end (124) of the bar (64) mounted on the central unit (14) and displaceable along its axis of rotation.

38. Uni-axle vehicle as defined in claim 37, characterized in that the gear element (114, 116) is transferrable by displacement into a position corresponding to the steering position of the bar mounting (115), the actuating element (110) of the control valve (108) being adjustable by this gear element (114, 116) in said position.

39. Uni-axle vehicle as defined in either of claims 37 or 38, characterized in that the gear element (114, 116) is transferrable by displacement into the position corresponding to the freely rotating position of the bar mounting (115), this gear element (114, 116) being freely rotatable in said position.

40. Uni-axle vehicle as defined in any of claims 37 to 39, characterized in that the gear element (114, 116) is transferrable by displacement into the position corresponding to the non-rotatable position of the bar mounting (115), the gear element engaging in said position with a counterpart (126) rigidly arranged on the control unit (24).

41. Uni-axle vehicle as defined in any of the preceding claims, characterized in that a dead man's circuit is provided for sensing both handles (70) as well as a control lever (168) of the drive unit (26), said circuit switching off the drive motor (18) when a hand of an operator does not grip at least one handle (70) when the control lever (168) of the drive unit (26) is deflected out of the neutral position (170).

42. Uni-axle vehicle as defined in claim 41, characterized in that each handle (70) has a displacement chamber (296) with a volume variable by hand pressure, said chamber communicating with a pressure sensor (300) triggering, for its part, the signal indicating the grasped handle (70) when the displacement chamber (296) is deformed.

43. Uni-axle vehicle as defined in claim 41, characterized in that each handle (70) comprises a photosensor (302) in a region covered when the handle is gripped, said sensor being covered when a hand is placed over the handle and triggering the signal indicating the grasped handle (70).

44. Uni-axle vehicle as defined in any of claims 41 to 43, characterized in that the control lever (168) is provided with a contact surface (278) pivotable together therewith, a contact finger (276) abutting on said surface, and that the contact surface (278) is designed such that in the neutral position (170) of the control lever (168) no electrical contact is establishable between this and the contact finger (276) whereas a contact exists outside the neutral position (170).

45. Uni-axle vehicle as defined in any of claims 41 to 44, characterized in that the control lever (168) is provided with a slotted arm (278) actuating a feeler device (276) and being symmetrical to the neutral position (170).

46. Uni-axle vehicle as defined in any of the preceding claims, characterized in that this is provided with a wheel-supported seat unit (230).

47. Uni-axle vehicle as defined in claim 46, characterized in that the seat unit (230) comprises a wheel unit (240, 242) freely rotatable about an axis approximately at right angles to the plane of travel (20).

48. Uni-axle vehicle as defined in claim 45, characterized in that the seat unit (230) is pivotable relative to the uni-axle vehicle (10) about an axis (252) parallel to its axis (74).

## Revendications

1. Machine à un seul essieu comprenant un guidon, un moteur à combustion interne (18) et deux roues commandées (78) montées sur un essieu (74), le moteur à combustion interne (18) entraînant une machine hydrostatique (26), celle-ci commandant au moins un moteur de traction (76) et ce dernier commandant de son côté les deux roues (78), ainsi qu'un dispositif de moncage d'outils portés, caractérisée en ce que la machine à un seul essieu (10) comprend un groupe central (14) formé du moteur à combustion interne (18), de la machine hydrostatique (26), du guidon (64) et du dispositif de montage d'outils portés (260), ainsi qu'un groupe à essieu (72) relié de manière amovible au groupe central (14) et formé du moteur de traction (76) et de l'essieu (74).

2. Machine à un seul essieu selon la revendication 1, caractérisée en ce que le groupe à essieu (72) et le groupe central (14) peuvent être positionnés à des positions différentes l'un par rapport à l'autre à peu près perpendiculairement à la direction de l'essieu et parallèlement à la direction de la marche (22).

3. Machine à un seul essieu selon la revendication 2, caractérisée en ce que le groupe à essieu (72) et le groupe central (14) sont déplaçables l'un par rapport à l'autre.

4. Machine à un seul essieu selon la revendication 2 ou 3, caractérisée en ce que le groupe à essieu (72) est monté déplaçable sur le groupe central (14).

5. Machine à un seul essieu selon la revendication 4, caractérisée en ce que le groupe à essieu (72) est déplaçable au moyen d'une tige filetée (94).

6. Machine à un seul essieu selon la revendication 4, caractérisée en ce que le groupe à essieu (72) est déplaçable au moyen d'un dispositif hydraulique (102).

7. Machine à un seul essieu selon la revendication 6, caractérisée en ce que le groupe à essieu (72) est déplaçable au moyen du dispositif hydraulique (102) en fonction du couple antagoniste des roues.

8. Machine à un seul essieu selon la revendication 7, caractérisée en ce que le dispositif hydraulique (102) détecte le couple antagoniste des roues par les variations de pression dans un circuit (76) de la machine hydrostatique (26) et du moteur de traction et commande au moyen de ce circuit un cylindre hydraulique (102).

9. Machine à un seul essieu selon la revendication 8, caractérisée en ce que le cylindre hydraulique (102) comprend un piston de réglage (103) qui est soumis dans un sens à la force d'un élément (105) ayant l'élasticité d'un ressort et, dans le sens opposé, à la pression régnant dans le circuit de la machine hydrostatique et du moteur de traction.

10. Machine à un seul essieu selon l'une des revendications 1 à 9, caractérisée en ce que le groupe central (14) comprend une prise de force (42) commandée mécaniquement par le moteur à combustion interne (18) et destinée à la commande des outils portés (12).

11. Machine à un seul essieu selon la revendication 10, caractérisée en ce que le moteur à combustion interne (18) comprend un arbre de sortie (46) sensiblement perpendiculaire à un plan de marche (20) et entraine par un premier train de transmission (48, 50, 52) un arbre (54) de commande de la machine hydrostatique (26) qui est parallèle à cet arbre de sortie (46) et par un second train de transmission (48, 56, 58), un arbre (60) de commande du train (40) de la prise de force qui est parallèle à l'arbre de sortie (46).

12. Machine à un seul essieu selon la revendication 11, caractérisée en ce que le premier et le second trains de transmission (48, 50, 52 ; 48, 56, 58) sont des transmissions à courroie.

13. Machine à un seul essieu selon la revendication 11 ou 12, caractérisée en ce que les trains de transmission (48, 50, 52 ; 48, 56, 58) sont disposés sensiblement entre deux longerons (30) du groupe central (14).

14. Machine à un seul essieu selon l'une des revendications précédentes, caractérisée en ce qu'un moteur de traction (76) monté fixe sur l'essieu est affecté à chaque roue (78).

15. Machine à un seul essieu selon la revendication 14, caractérisée en ce que les moteurs (76) de traction des deux roues (78) sont branchés en parallèle.

16. Machine à un seul essieu selon la revendication 15, caractérisée en ce qu'un débit d'huile circulant dans chaque moteur de traction (76) est réglable par un groupe de commandes (24) au moyen d'un distributeur (108).

17. Machine à un seul essieu selon la revendication 16, caractérisée en ce que le distributeur (108) comprend un organe de commande (154, 164) qui, en marche avant, commande les débits d'huile de manière qu'ils diffèrent d'une distribution égale.

18. Machine à un seul essieu selon la revendication 17, caractérisée en ce que l'organe de commande (154, 164) n'est pas en action en marche arrière.

19. Machine à un seul essieu selon la revendication 18, caractérisée en ce que des conduits en parallèle (160) destinés à être branchés en marche arrière et en dérivation sur l'organe de commande (154, 164) sont prévus.

20. Machine à un seul essieu selon la revendication 19, caractérisée en ce que chaque conduit en parallèle comprend une soupape unidirectionnelle (160) qui le bloque en marche avant et le libère en marche arrière.

21. Machine à un seul essieu selon l'une des revendications 16 à 20, caractérisée en ce qu'un équirépartiteur (162) distribuant le débit d'huile sur les deux moteurs de traction (76) est prévu et en ce que le distributeur (108) est monté en parallèle avec l'équirépartiteur (162) pour la commande des débits d'huile.

22. Machine à un seul essieu selon la revendication 21, caractérisée en ce que l'organe de commande (164) est blocable par une soupape (160a', b', c') en marche arrière.

23. Machine à un seul essieu selon la revendication 22, caractérisée en ce que la soupape (160a', b', c') est une soupape de retenue.

24. Machine à un seul essieu selon l'une des revendications 21 à 23, caractérisée en ce qu'une liaison (155) supprimant l'action de l'équirépartiteur (162) peut être établie en marche arrière entre un conduit central d'arrivée (162c) de l'équirépartiteur et des conduits (82a, b) menant des moteurs de traction (76a, b) à l'équirépartiteur (162).

25. Machine à seul essieu selon l'une des revendications 16 à 24, caractérisée en ce que des soupapes d'inversion (165) permettant d'inverser l'action de l'organe de commande (164) sur les débits d'huile passant par chaque moteur de traction (76a, b) en marche arrière sont prévues.

26. Machine à un seul essieu selon la revendication 25, caractérisée en ce que la liaison qui existe en marche avant entre chaque sortie (164a, b) de l'organe de commande (164) et le conduit hydraulique correspondant (80a, b) peut être interrompue en marche arrière et une liaison de chaque sortie (164a, b) avec l'autre conduit hydraulique (800, a) peut être établie.

27. Machine à un seul essieu selon l'une des revendications 16 à 26, caractérisée en ce que le groupe de commande (24) comprend un support (115) du guidon et en ce que le guidon (64) est rotatif par rapport au groupe de commande (24) lorsque le support du guidon (115) est à une position de braquage et le distributeur (108) peut être actionné par une rotation du guidon (64).

28. Machine à un seul essieu selon la revendication 27, caractérisée en ce que le guidon (64) est rotatif dans le support (115) autour d'un axe qui est sensiblement perpendiculaire à un châssis (16) de la machine à un seul essieu (10).

29. Machine à un seul essieu selon la revendication 27 ou 28, caractérisée en ce que le guidon (64) est rotatif de manière limitée lorsqu' il est en position de braquage.

30. Machine à un seul essieu selon l'une des revendication 16 à 29, caractérisée en ce que le distributeur (108) comprend un élément d'actionnement (110) qu'au moins un élément élastique (146, 148) peut remettre en position de marche rectiligne.

31. Machine à un seul essieu selon l'une des revendications 27 à 30, caractérisée en ce qu'un élément élastique (146, 148) peut remettre le guidon en position de marche rectiligne.

32. Machine à un seul essieu selon l'une des revendications 27 à 31, caractérisée en ce qu'un élément de transmission (112) est disposé entre le guidon (64) et l'élément d'actionnement (110) du distributeur (108).

33. Machine à un seul essieu selon la revendication 32, caractérisée en ce que l'élément de transmission (112) est conformé de manière à remettre le guidon (64) et l'élément d'actionnement (110) en position de marche rectiligne (149) au moyen d'éléments élastiques (146, 148).

34. Machine à un seul essieu selon l'une des revendications 27 à 33, caractérisée en ce que, lorsque le support (115) du guidon est en position de braquage, la position de marche rectiligne (149', 149'') du guidon (64) peut être positionnée en étant tournée de manière qu'elle forme un angle avec la direction de la marche rectiligne (149).

35. Machine à un seul essieu selon l'une des revendications 27 à 34, caractérisée en ce que le support (115) du guidon comprend une position qui fixe le guidon (64) sur le groupe central (14) de manière qu'il soit immobile en rotation.

36. Machine à un seul essieu selon l'une des revendications 27 à 35, caractérisée en ce que le support (115) du guidon comprend une position librement rotative dans laquelle le guidon (64) est librement rotatif par rapport au groupe de commande (24) et à l'élément d'actionnement (110) du distributeur (108) ainsi que par rapport au châssis (16).

37. Machine à un seul essieu selon l'une des revendications 27 à 36, caractérisée en ce que le support (115) du guidon comprend un élément de transmission (114, 116) qui est retenu immobile en rotation sur une extrémité (124) du guidon (64) montée sur le groupe central (14) et qui est coulissant le long de son axe de rotation.

38. Machine à un seul essieu selon la revendication 37, caractérisée en ce que l'élément de transmission (114, 116) peut être amené par coulissement à une position qui correspond à la position de braquage du support (115) du guidon et à laquelle l'élément d'actionnement (110) du distributeur (108) est déplaçable avec cet élément de transmission (114, 116).

39. Machine à un seul essieu selon l'une des revendications 37 ou 38, caractérisée en ce que l'élément de transmission (114, 116) peut être amené par coulissement à la position qui correspond à la position de rotation libre du support (115) du guidon et à laquelle cet élément de transmission (114, 116) est librement rotatif.

40. Machine à un seul essieu selon l'une des revendications 37 à 39, caractérisée en ce que l'élément de transmission (114, 116) peut être amené par coulissement à la position qui correspond à la position d'immobilisation en rotation du support (115) du guidon et à laquelle il est en prise avec une pièce complémentaire (126) qui est fixée sur le groupe de commande (24).

41. Machine à un seul essieu selon l'une des revendications précédentes, caractérisée en ce qu'un dispositif d'homme mort qui palpe les deux poignées (70) ainsi qu'un levier de commande (168) du groupe d'entraînement (26) est prévu et coupe le moteur de commande (18) lorsqu'au moins une poignée (70) n'est pas saisie par une main d'une personne de service lorsque le levier de commande (168) du groupe d'entraînement (26) est dévié par rapport à la position neutre (70).

42. Machine à un seul essieu selon la revendication 41, caractérisée en ce que chaque poignée (70) comprend une chambre de refoulement (296) dont le volume est modifiable par appui manuel et qui communique avec un détecteur de pression (300) qui, de son côté, déclenche le signal d'annonce à la poignée saisie (70) lorsque la chambre de refoulement (296) est déformée.

43. Machine à seul essieu selon la revendication 41, caractérisée en ce que chaque poignée (70) comprend un photo-détecteur (302) placé dans une région chevauchée par appui manuel, recouverte par la main posée et déclenchant le signal annonçant que la poignée (70) est saisie.

44. Machine à un seul essieu selon l'une des revendications 41 à 43, caractérisée en ce que le levier de commande (168) comporte une surface de contact (278) oscillant avec lui et sur laquelle est placé un doigt de contact (276) et en ce que la surface de contact (278) est conformée de manière que, lorsque le levier de commande (168) est à la position neutre (170), aucun contact électrique ne puisse être établi entre ce dernier et le doigt de contact (276), tandis qu'un contact existe en dehors de la position neutre (170).

45. Machine à un seul essieu selon l'une des revendications 41 à 44, caractérisée en ce que le levier de commande (168) est équipé d'un coulisseau (278) qui actionne un palpeur (276) et qui est symétrique par rapport à la position neutre (170).

46. Machine à un seul essieu selon l'une des revendications précédentes, caractérisée en ce qu'elle est équipée d'un siège (230) supporté par les roues.

47. Machine à un seul essieu selon la revendication 46, caractérisée en ce que le siège (230) comprend un ensemble à roulettes (240, 242) librement rotatif autour d'un axe sensiblement perpendiculaire au plan de marche (20).

48. Machine à un seul essieu selon la revendication 45, caractérisée en ce que le siège (230) est basculable par rapport à la machine (10) autour d'un axe (252) qui est parallèle à son essieu (74).
